# EUROPEAN PATENT SPECIFICATION

(11) **EP 1 447 756 B1**
(45) Date of publication and mention of the grant of the patent: **13.01.2010**
(21) Application number: 03003129.8
(22) Date of filing: 13.02.2003
(51) Int. Cl.: G06F 17/30

(54) **Network-based document management system**
Netzwerk-basierendes System zum Verwalten von Dokumenten
Système basé sur un réseau pour la gestion de documents

(43) Date of publication of application: 18.08.2004
(73) Proprietor: UBS AG, 8098 Zürich (CH)
(72) Inventor: Horber, Felix, Dr., 6300 Zug (CH)
(74) Representative: Röthinger, Rainer

(56) References cited:
- EP-A- 1 122 652
- EP-A- 1 280 076
- NOAH W W: "The integration of the World Wide Web and intranet data resources" SYSTEM SCIENCES, 1998., PROCEEDINGS OF THE THIRTY-FIRST HAWAII INTERNATIONAL CONFERENCE ON KOHALA COAST, HI, USA 6-9 JAN. 1998, LOS ALAMITOS, CA, USA,IEEE COMPUT. SOC, US, 6 January 1998 (1998-01-06), pages 496-502, XP010263110 ISBN: 0-8186-8255-8
- SURJANTO B ET AL: "XML content management based on object-relational database technology" WEB INFORMATION SYSTEMS ENGINEERING, 2000. PROCEEDINGS OF THE FIRST INTERNATIONAL CONFERENCE ON HONG KONG, CHINA 19-21 JUNE 2000, LOS ALAMITOS, CA, USA,IEEE COMPUT. SOC, US, 19 June 2000 (2000-06-19), pages 70-79, XP010521839 ISBN: 0-7695-0577-5

## Description

### FIELD OF THE INVENTION

The present invention relates to a network-based document management system. More particularly, the invention relates to the control and to the configuration of network components that co-operate to generate, process and provide data originating from various sources to a number of users.

### BACKGROUND OF THE INVENTION

Modern communications networks like the public Internet, non-public intranets or combinations thereof have greatly facilitated the presentation and the exchange of information to/between large user groups. The facilitated information.exchange, ' however, necessitates an improved information management to cope with issues like lack of accessibility of information, sub-optimal speed of information retrieval, unnecessary duplication of processes and information, etc. It is obvious that due to the steadily increasing amount of information to be managed, the task of information management becomes increasingly laborious.

To facilitate the task of information management, numerous standard platforms have been developed. As an example for such a standard platform, Lotus Domino R5 distributed by Lotus/IBM Inc. can be mentioned. Despite the availability of such standard platforms, the existence of individual needs still requires complex considerations for example regarding network technologies and topologies, regarding the programming and interconnecting of network components and regarding the distribution of specific processing tasks among the individual network components.

Information to be processed by individual network components can relate to various aspects and usually the above considerations of a network technologist are independent from the specific nature of the processed information. However, there exist situations in which the nature of the processed information does influence technical aspects of the communications network and its components. In such a case it becomes essential that the technical environment including network topology, user interfaces, etc. is adapted to the specific type of information to ensure a proper, efficient and secure operation of the communications network. This holds true for, among others, information relating to tasks, processes or events, but also to data reflecting the structure, the incorporation and the executives of an organisation and the definitions and procedures according to which this organisation implements and carries out its business.

There is a need for a technical environment which allows for an improved information management. More specifically, there is a need for appropriately configured network components and a method of controlling such network components which allow for a fast, efficient and secure processing of information the above mentioned kinds.

This holds especially true when in a large - and often times geographically and structurally distributed - organisation that exists for a long period of time, several content providing network systems serving different and/or overlapping purposes and user groups of the organisation, coexist within said organisation.

EP1280076A2 describes a system and method for generating and distributing an electronic publication to be read by Internet users through their computer online. The document shows a system and method for formatting a publication. This system includes a processor coupled to a local interface and a memory coupled to the local interface. A publication distribution logic is stored on the memory and is executable by the processor. The publication distribution logic includes logic to associate a content item with a publication in the server and logic to identify a presentation platform from a number of potential presentation platforms. Also, the publication distribution logic includes logic to generate an output file in the server including the content item in a digital format recognizable by the presentation platform. This document describes a method for formatting a publication. This method includes the steps of associating a content item with a publication in the server, identifying a presentation platform from a number of potential presentation platforms, and generating an output file in the server including the content item in a digital format recognizable by the presentation platform. This allows users to request a specific publication that is delivered to a client in a convenient manner. In addition, the publication is formatted in a digital file that is recognizable and may be manipulated by one or more of a number of presentation platforms. Thus, a publication is provided to a user that may include content from many sources to users in a form convenient to the particular user.

EP1122652A1 describes a document format translation system for legacy data formats which comprises a first translating step from the legacy format into Extensible Markup Language (XML) and from there into Hyper Text Markup Language (HTML) for viewing and modification. More specifically, an enterprise integration system is described which coupled to a number of legacy data sources. The data sources each use different data formats and different access methods. The integration system includes a back-end interface configured for converting input data source information to input XML documents and for converting output XML documents to output data source information. A front-end interface converts the output XML documents to output HTML forms and the input HTML forms to the XML documents. A middle tier includes a rules engine and a rules database. Design tools are used to define the conversion and the XML documents. A network couples the back-end interface, the front-end interface, the middle tier, the design tools, and the data sources. Mobile agents are configured to communicate the XML documents over the network and to process the XML documents according to the rules.

### PROBLEM UNDERLYING THE INVENTION

A major technical problem resides in the fact that there is a constant change within the organiation, departments, working groups, project groups are formed and disbanded, new information technology (IT) hardware and software has to be provided to such units in the organisation and maintained in an operative state during the existence of said units. This is a very manpower-intensive and labourious task as many of the various content providing network systems in organisations heretofore have different user interfaces, require special client software on the user side and are to be updated when new software releases are available. Further, special client software required on the users' workstations demands increased hardware capabilities (storage capacity, working memory, processing capacity etc.) on the users' workstations. Also, the users have to be trained in use the of the software packages having disparate user interfaces due to their different origin and purposes.

Another aspect of the technical problem underlying the invention is the storage and the maintenance and the dissemination or presentation of the electronic dossiers available in an organisation. Usually, the documents can by static or dynamic, be created inside or external to the organisation, range in their complexity from simple alphanumeric and/or graphic documents to complex applications requiring data input by a user and/or data import from other documents or data sources (internet, intranet) during the utilisation of the document by a user. Creating, maintaining and updating this vast variety of different kinds of documents, web pages and data complications is very cumbersome and requires extensive IT skills.

### SUMMARY OF THE INVENTION

This need is satisfied by a workstation according to the appended claim 1. Specific embodiments are given in the dependent claims.

### PROPERTIES, ADVANTAGES AND ENHANCEMENTS OF THE INVENTION

The invention allows for a completely web-based creation, authoring, maintenance and managing environment for a wide variety of documents avoiding special client software that is very costly and requires a long lead time for its installation as well as differing hardware configurations on the user workstations' side. Rather, the utilisation of identical client workstations having reduced processing storage and working memory capabilites significantly facilitates the effective setup, change and dissolution of working units within the organisation.

### BRIEF DESCRIPTION OF THE DRAWINGS

Further details, embodiments, modifications or enhancements of the present invention may be obtained from consideration of the following description of various illustrative embodiments of the invention in conjunction with the drawings in which:
- Fig. 1: is a schematic diagram illustrating the data processing in accordance with the present invention;
- Fig. 2: is a schematic diagram illustrating a network component connected to a group of network components in a computer network for a unifield network-based document management comprising a hosting unit for hosting for access by the group of network components according to the invention;
- Fig. 3: is a schematic diagram illustrating the three-layered unified network-based document database system in accordance with the present invention;
- Fig. 4: is a schematic diagram illustrating the structure of a web page of an unified network-based document database management system in accordance with the present invention;
- Fig. 5: Templates provided by the system that can be utilised in the unified database;
- Fig. 6: is a schematic diagram illustrating the typical publishing cycle of a document on a web page of an unified network-based document database management system in accordance with the present invention; and

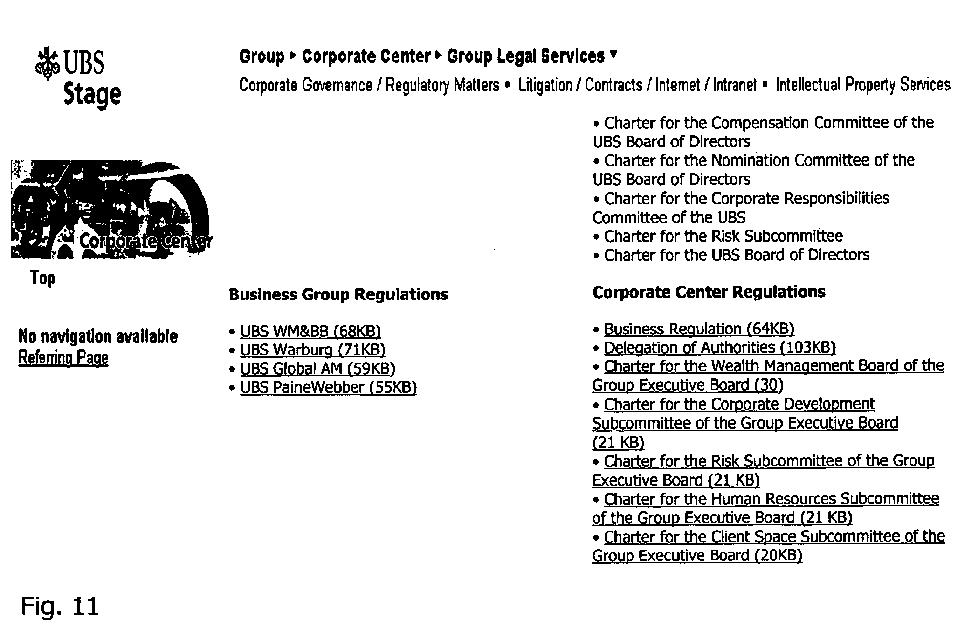

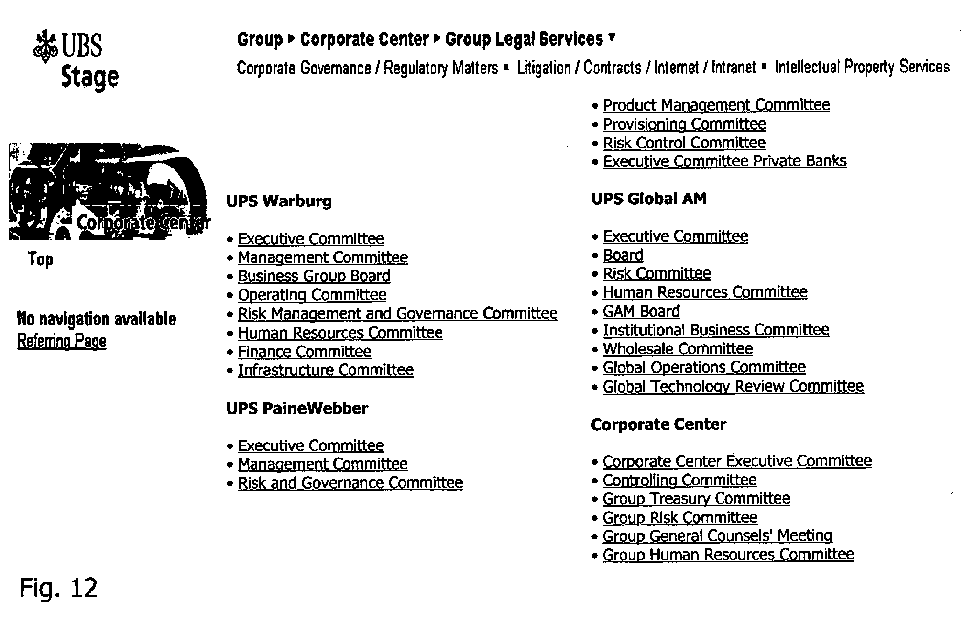

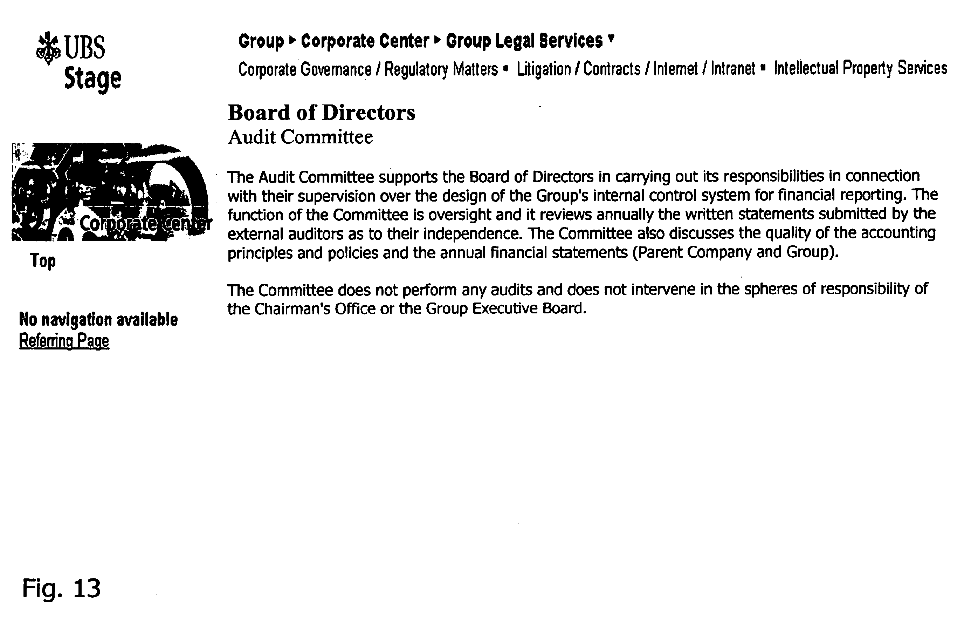

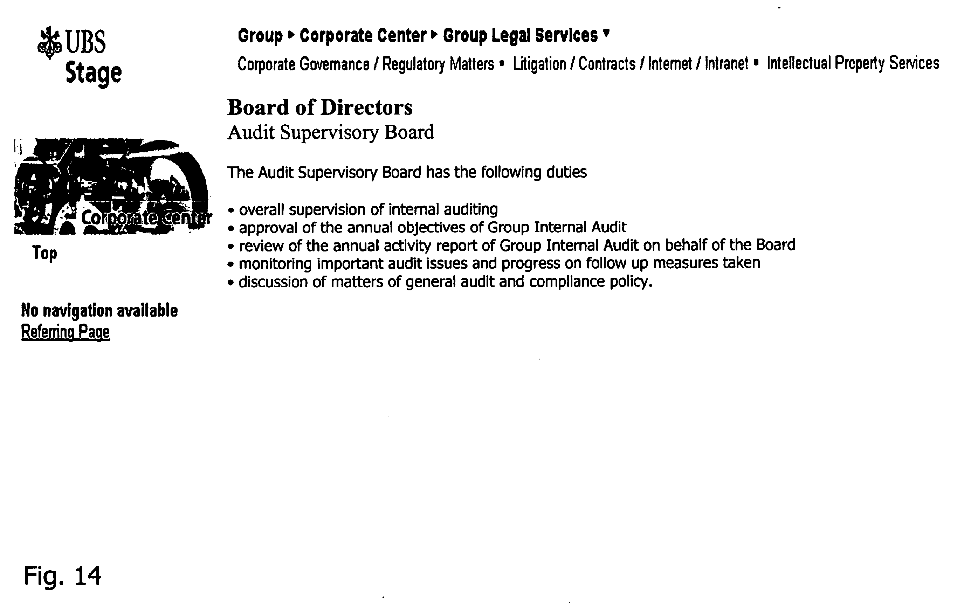

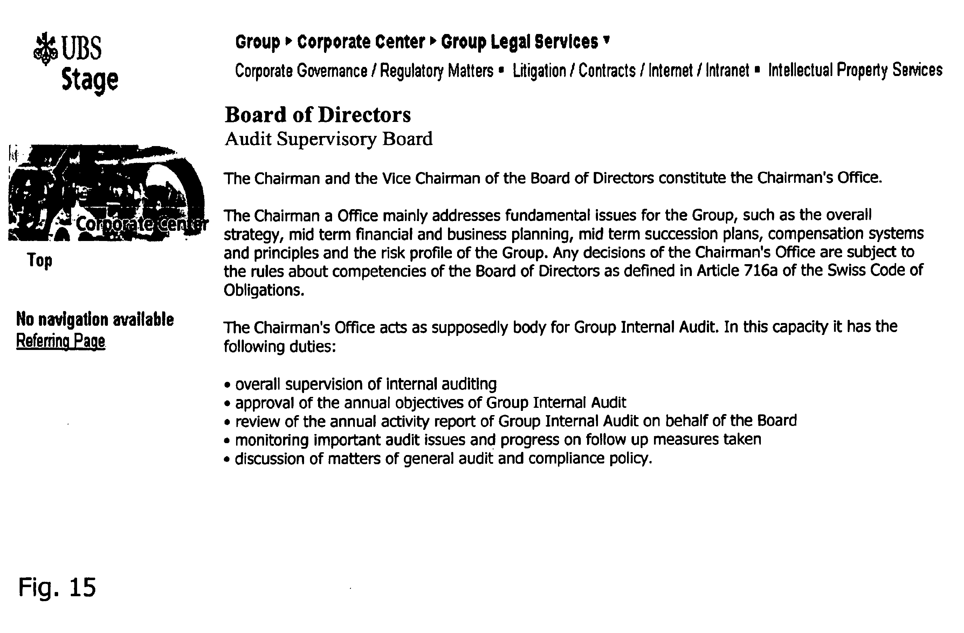

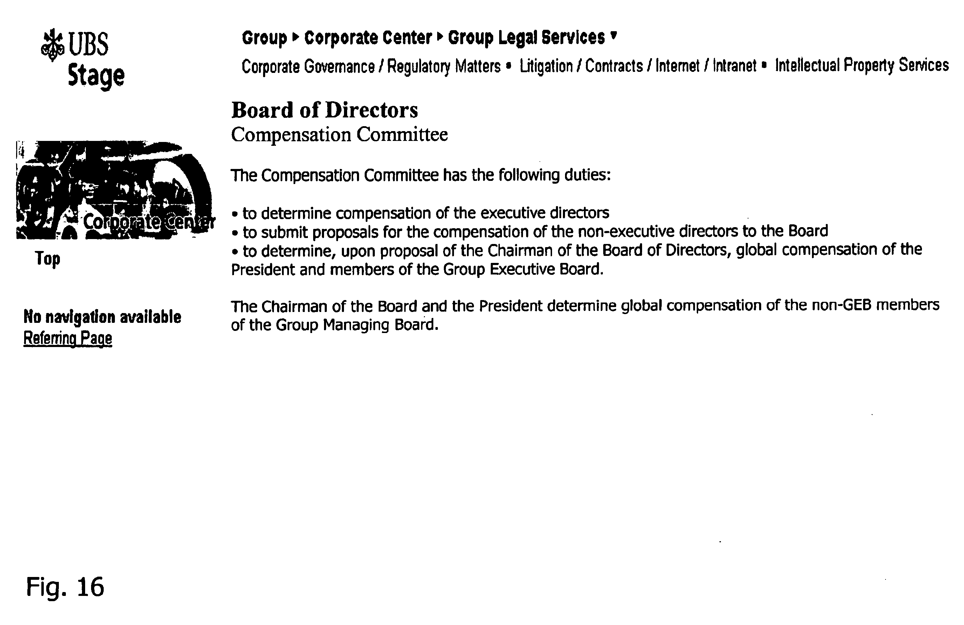

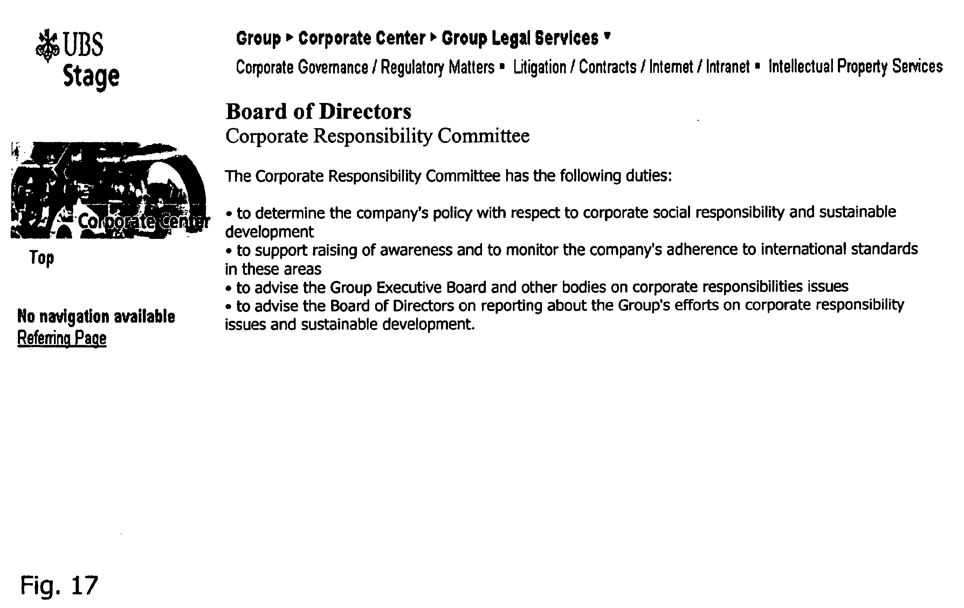

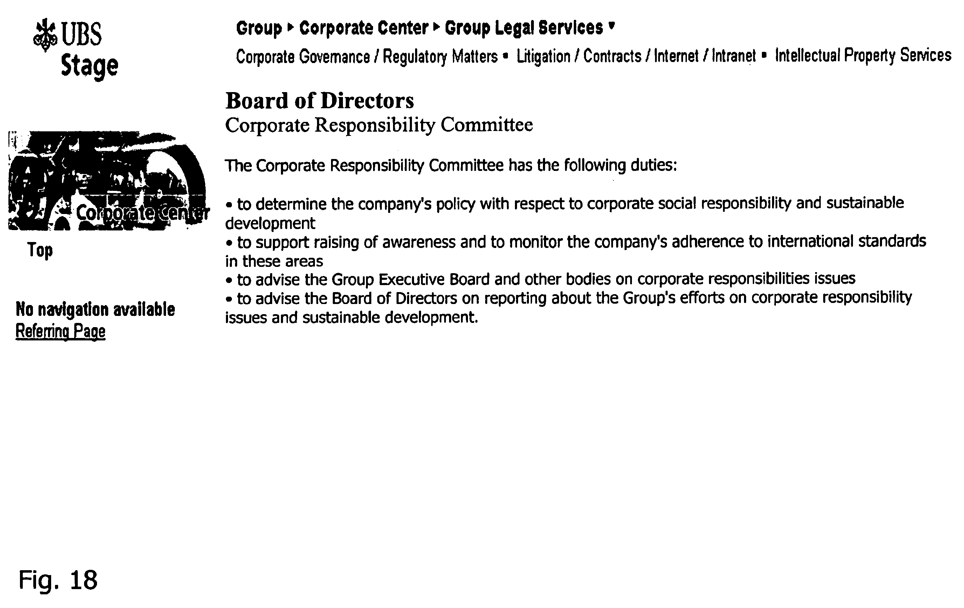

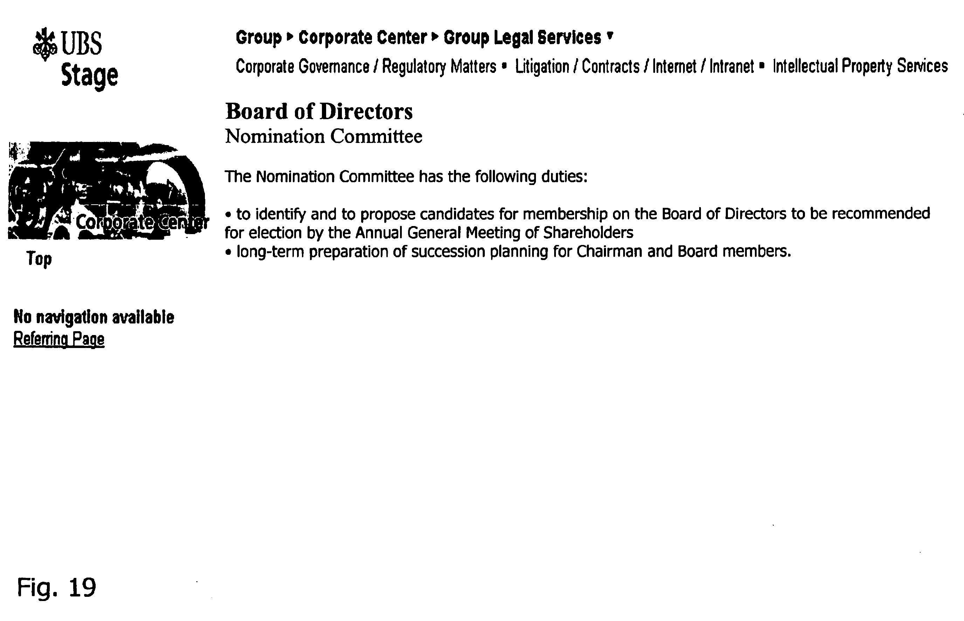

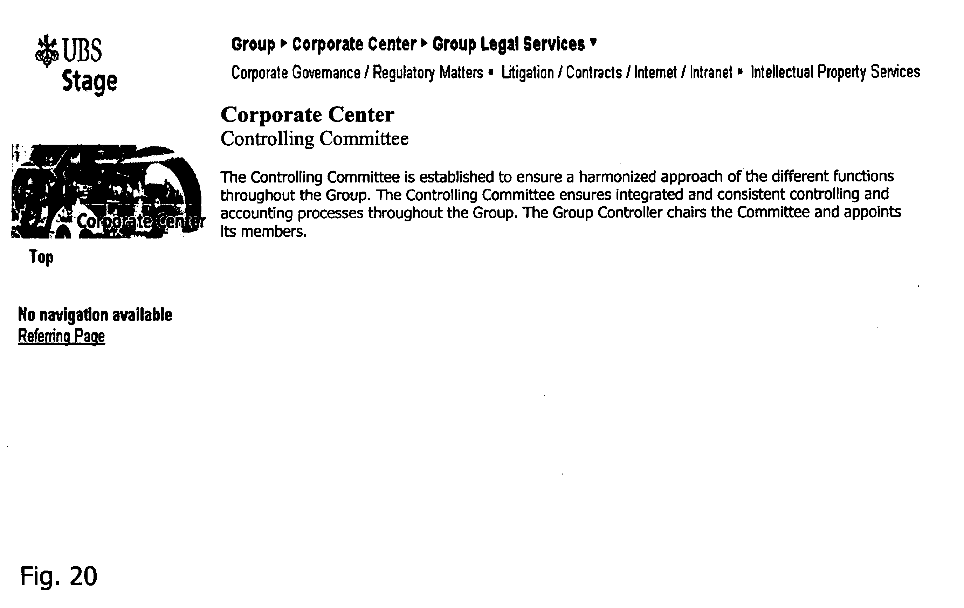

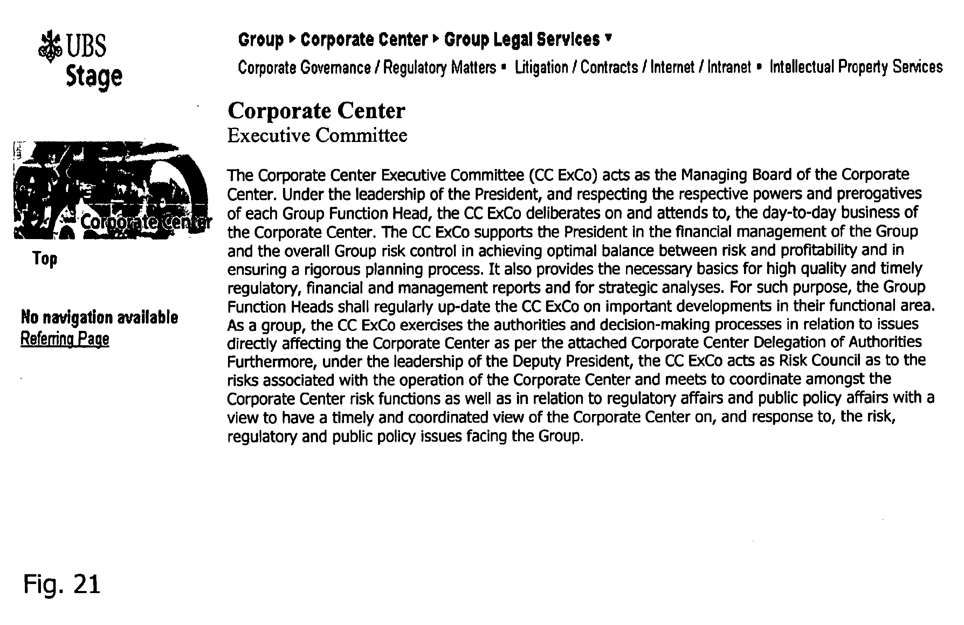

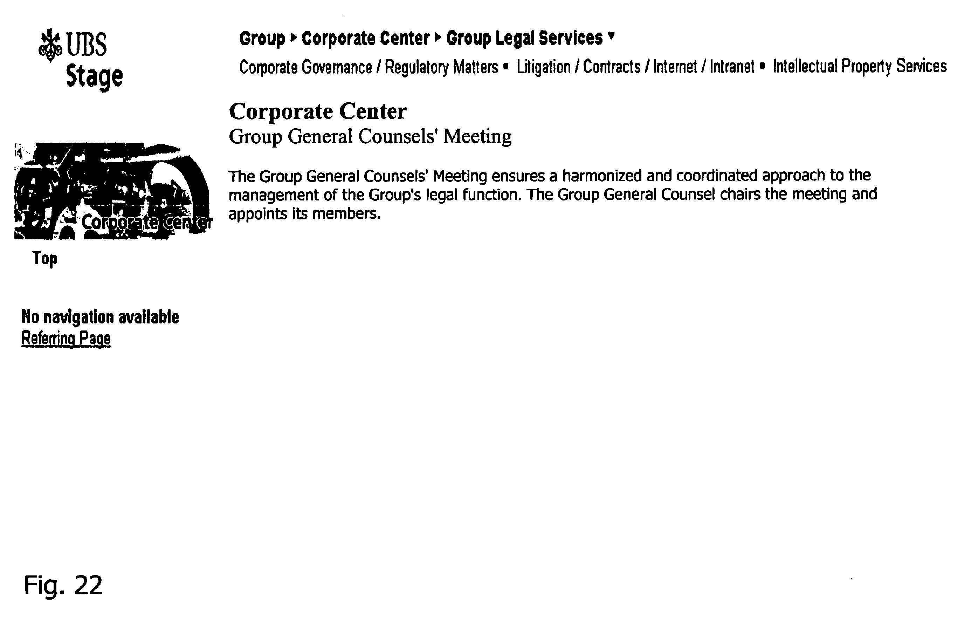

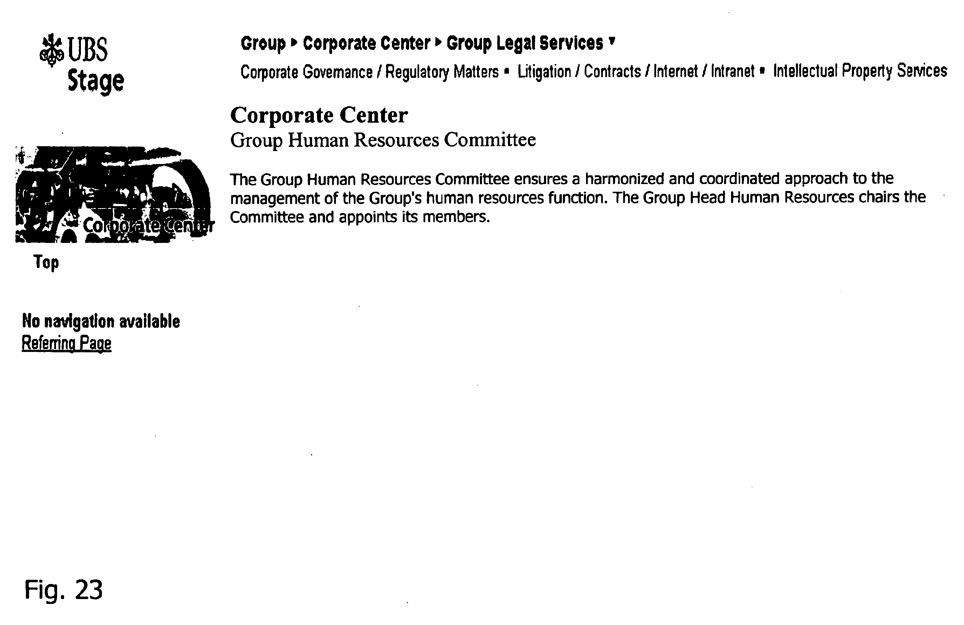

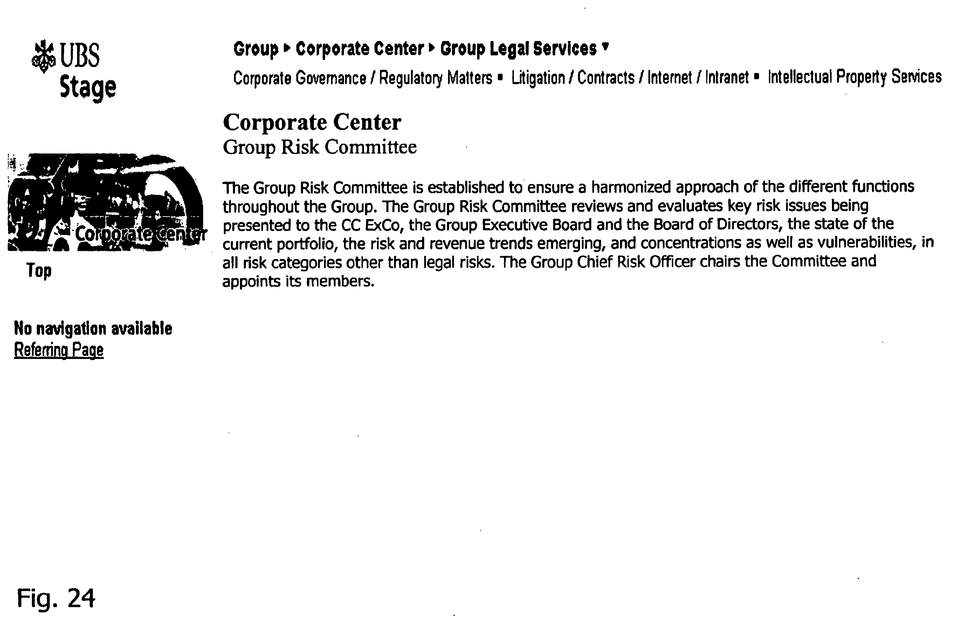

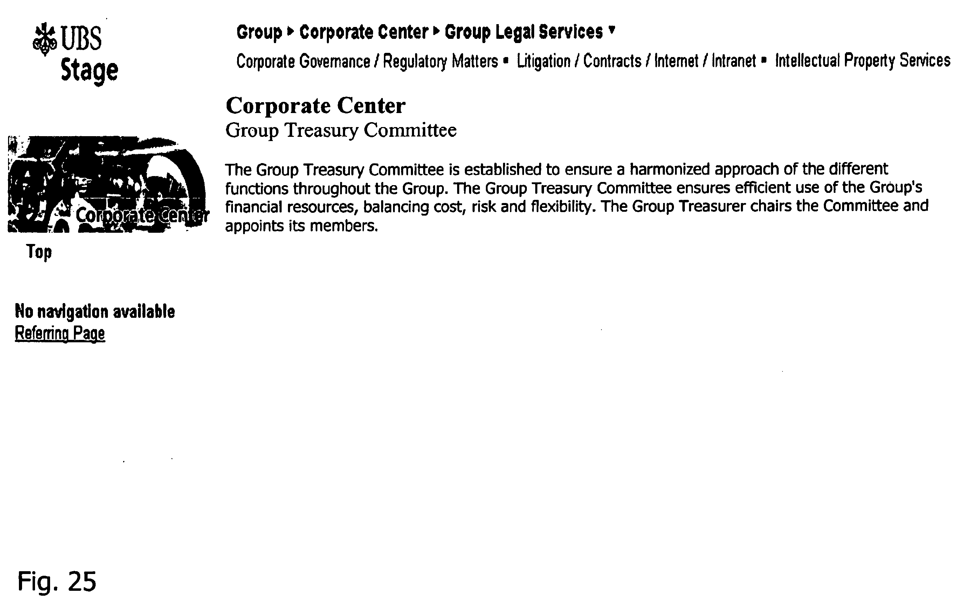

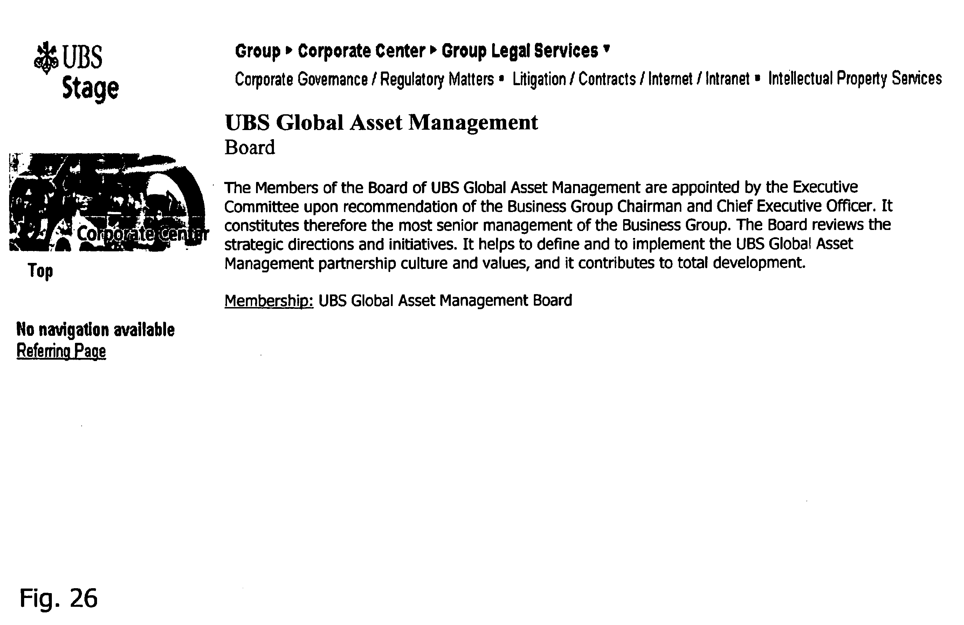

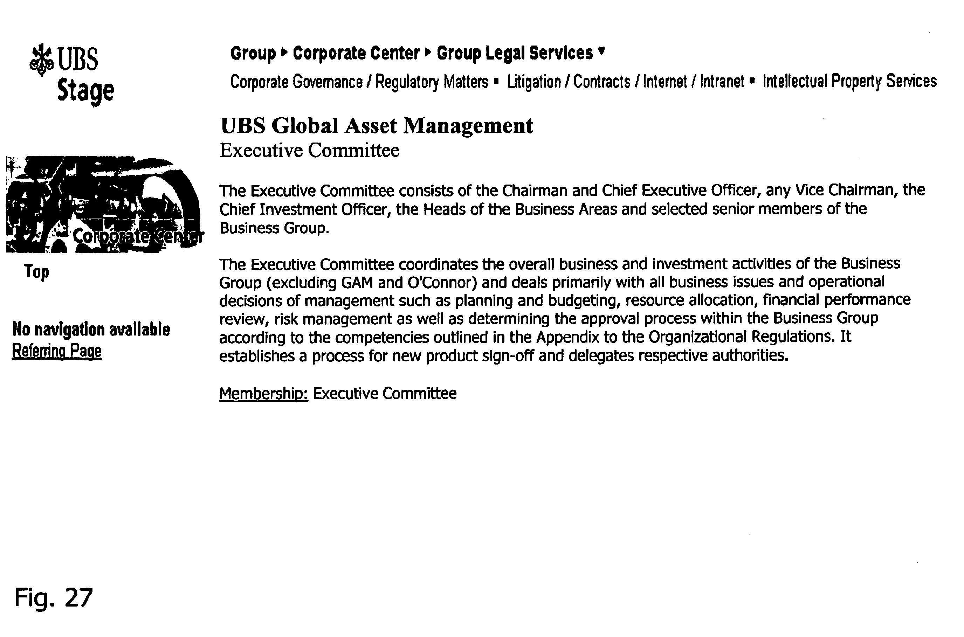

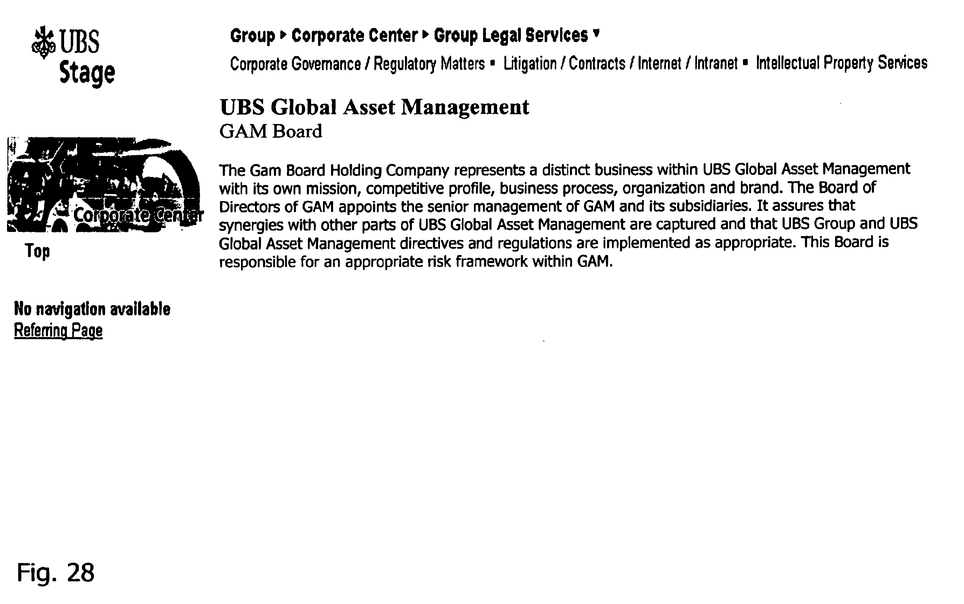

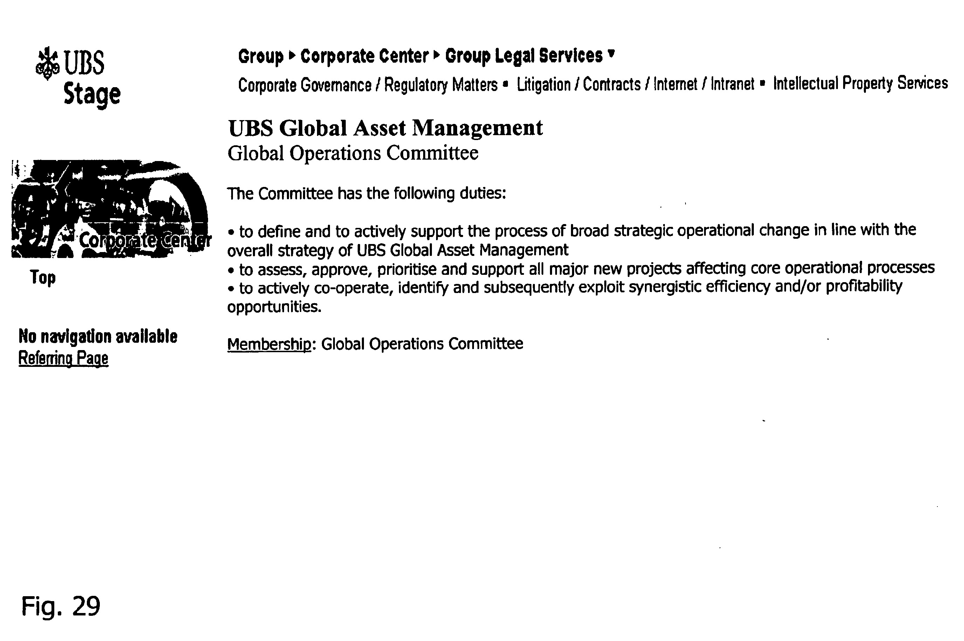

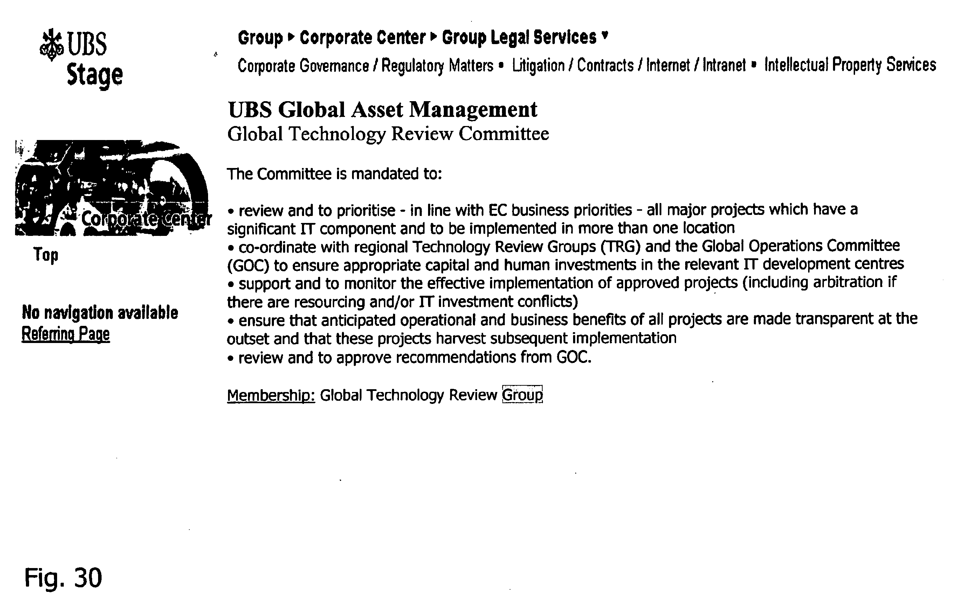

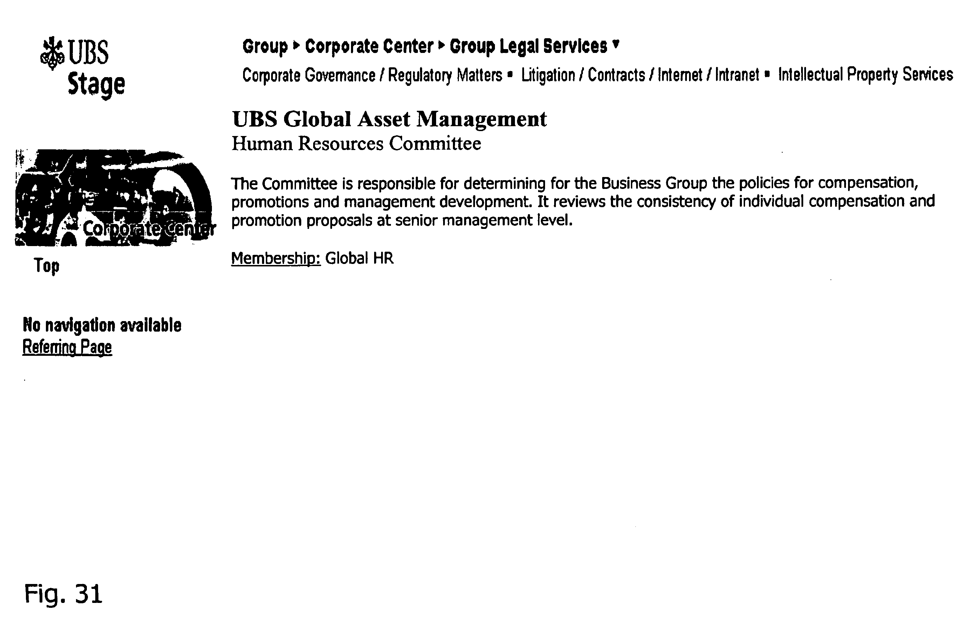

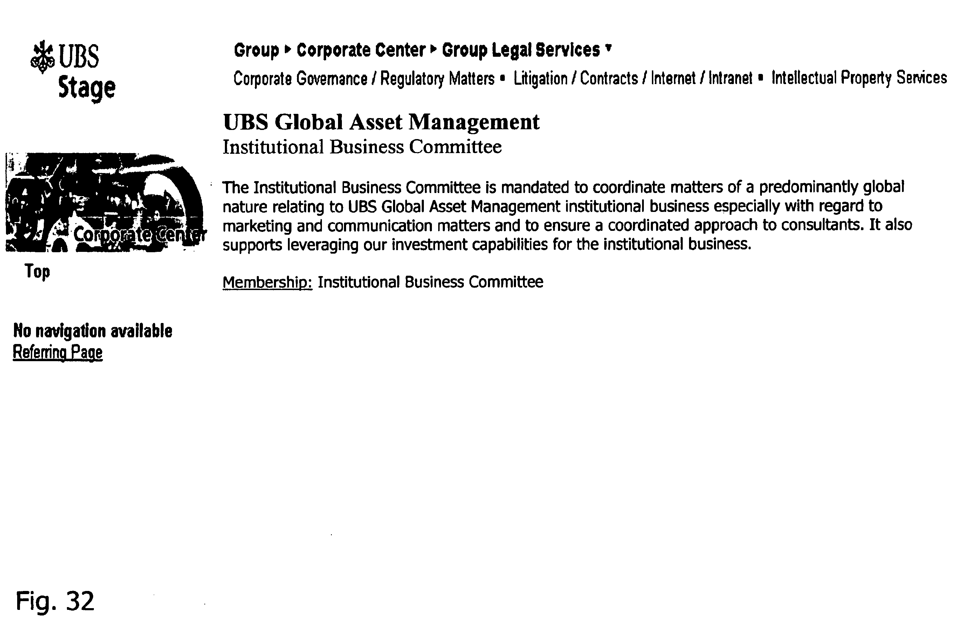

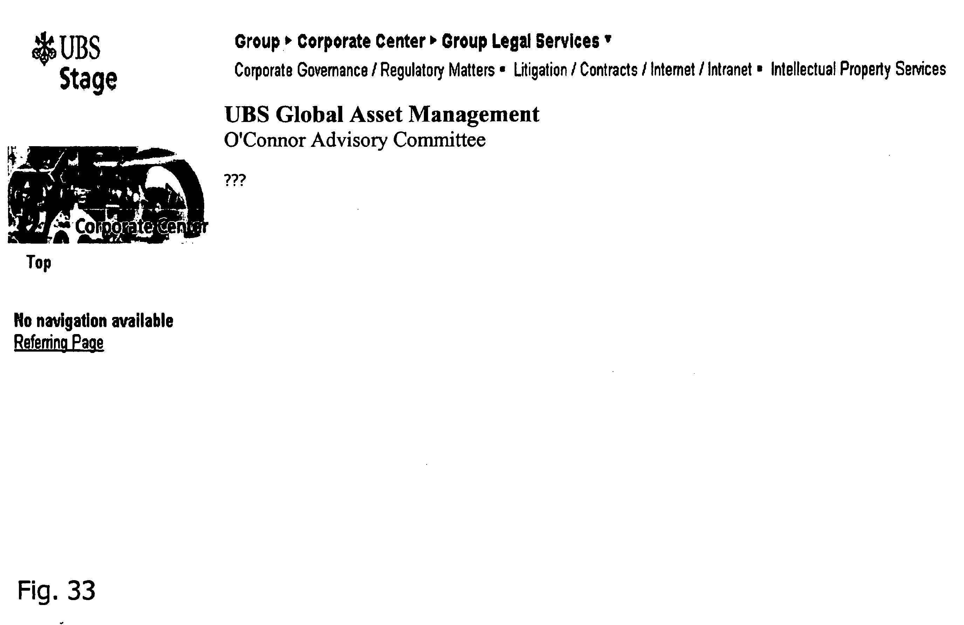

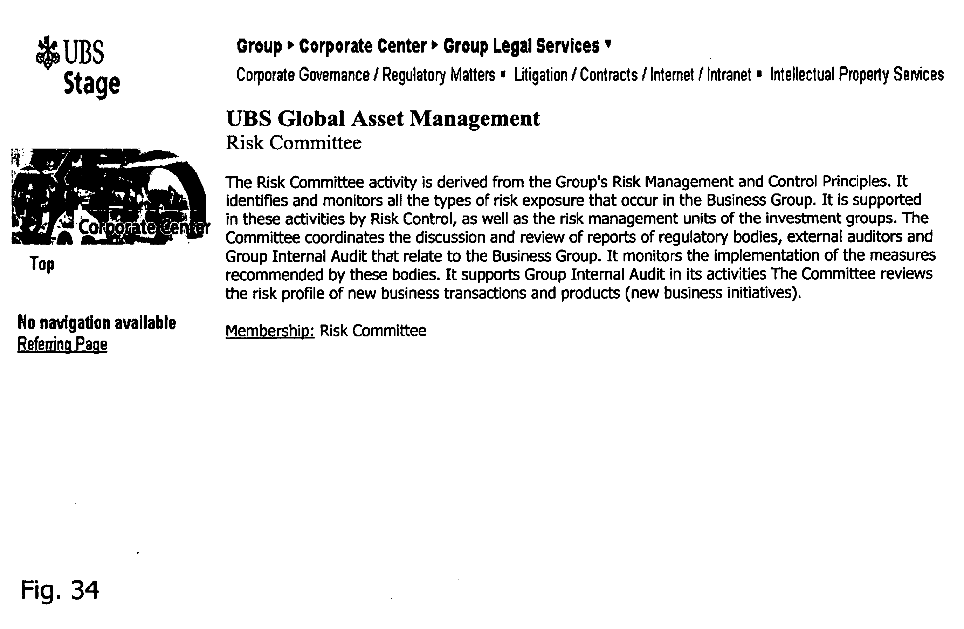

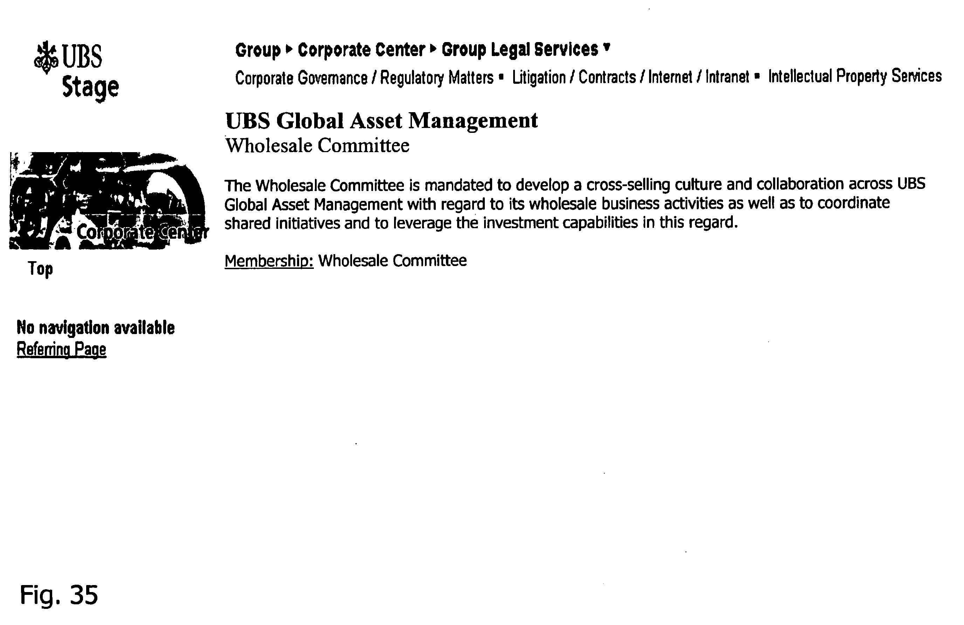

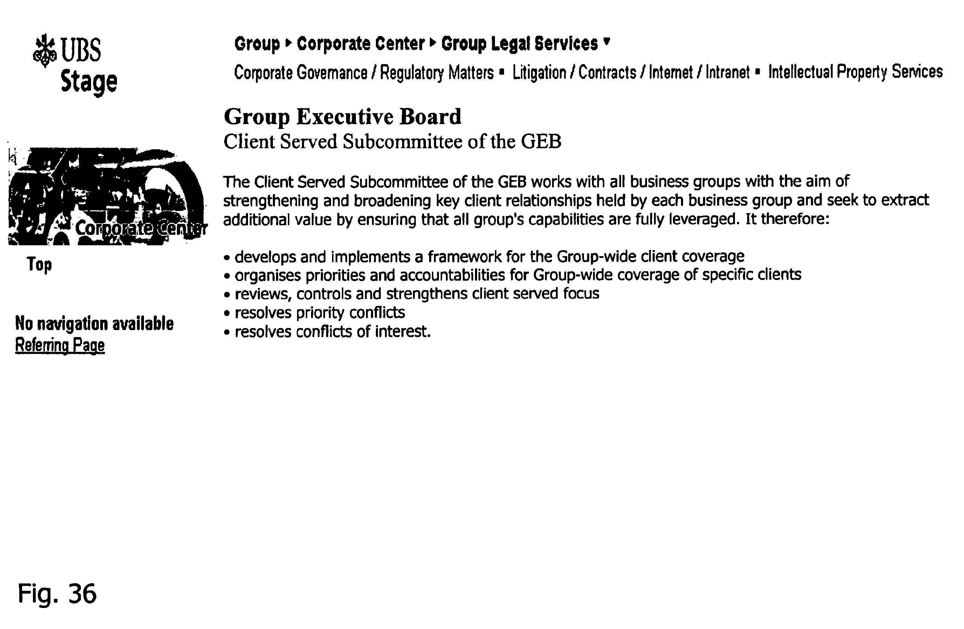

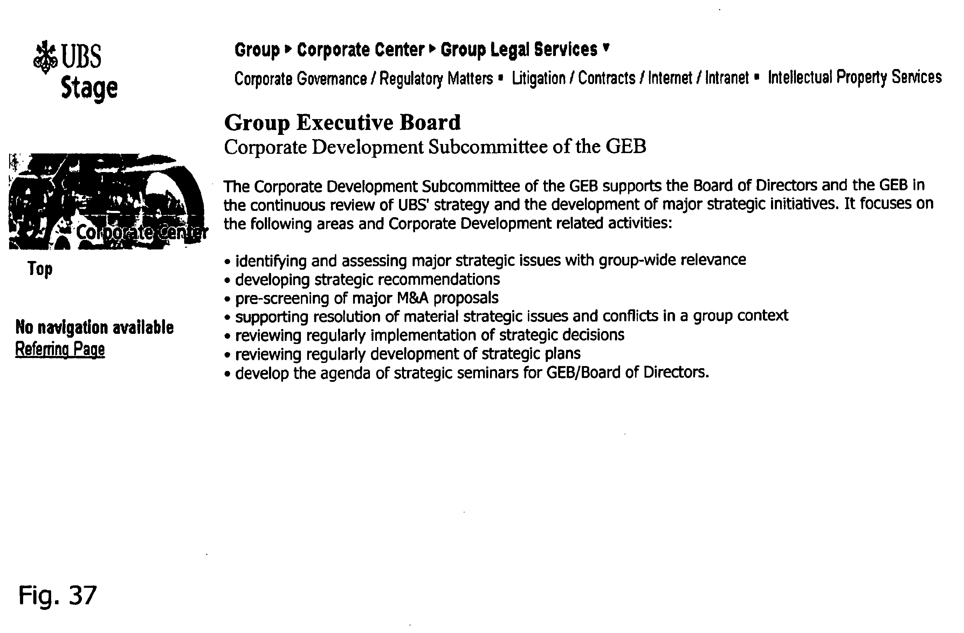

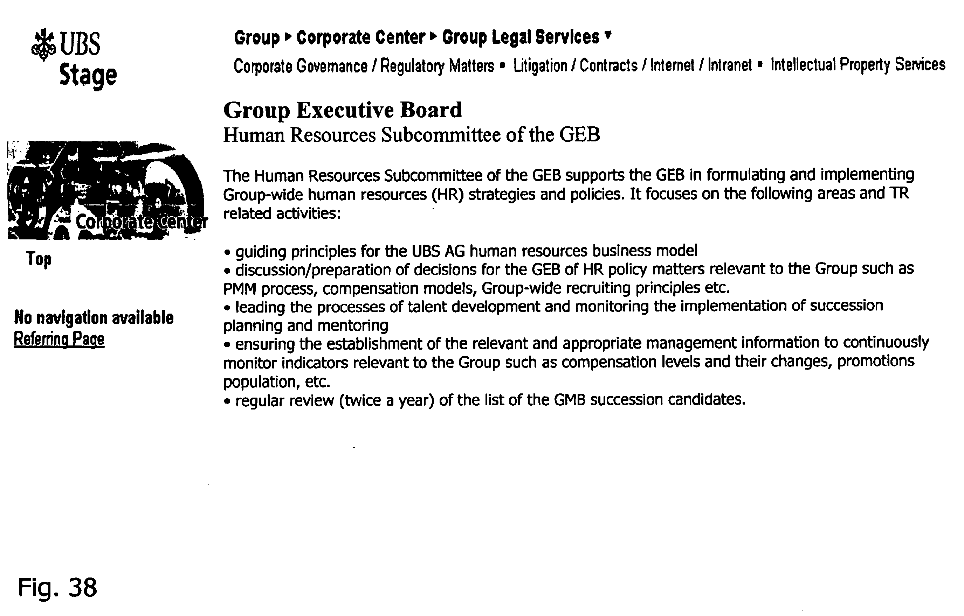

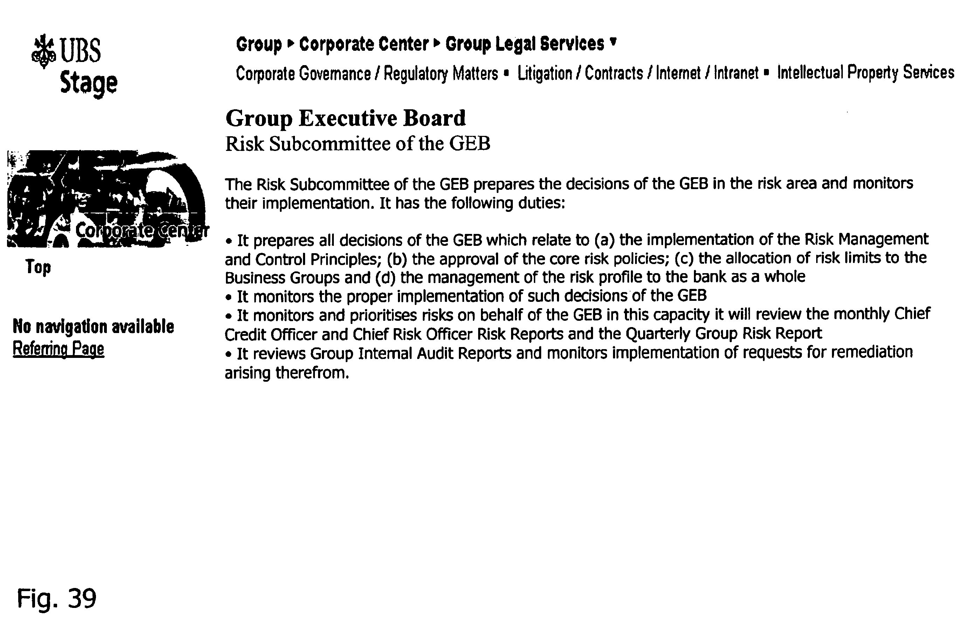

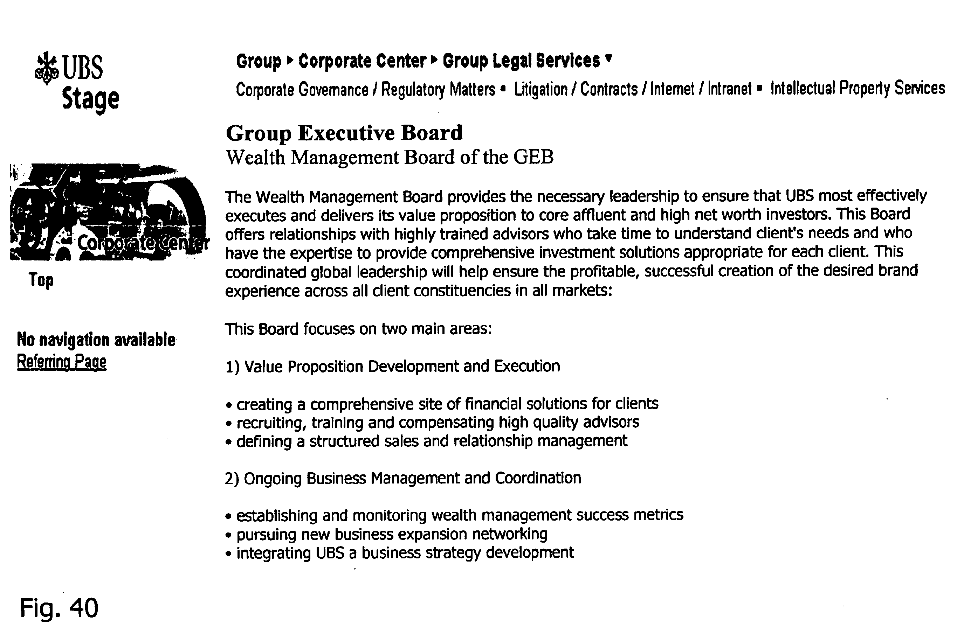

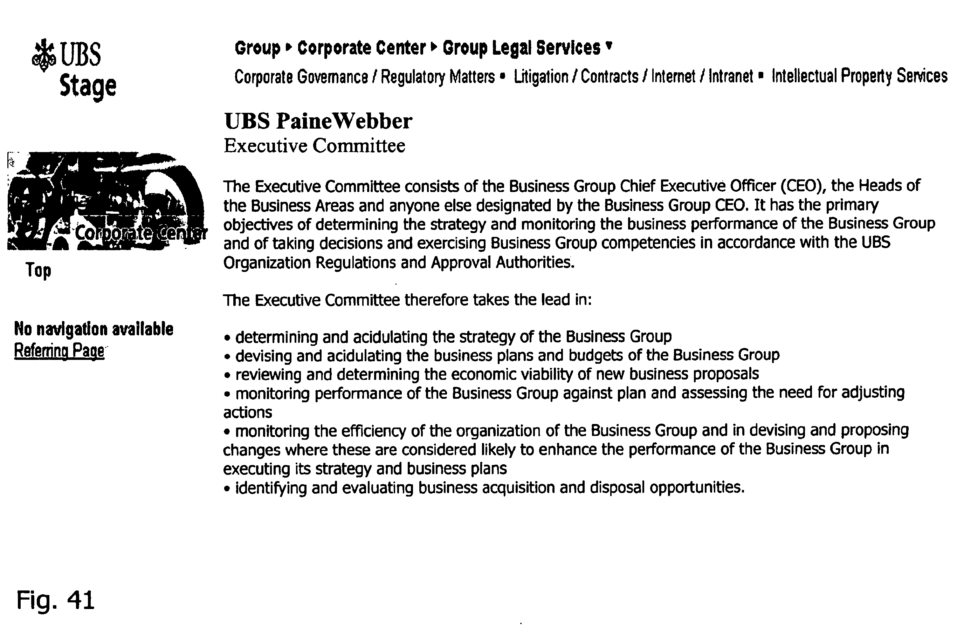

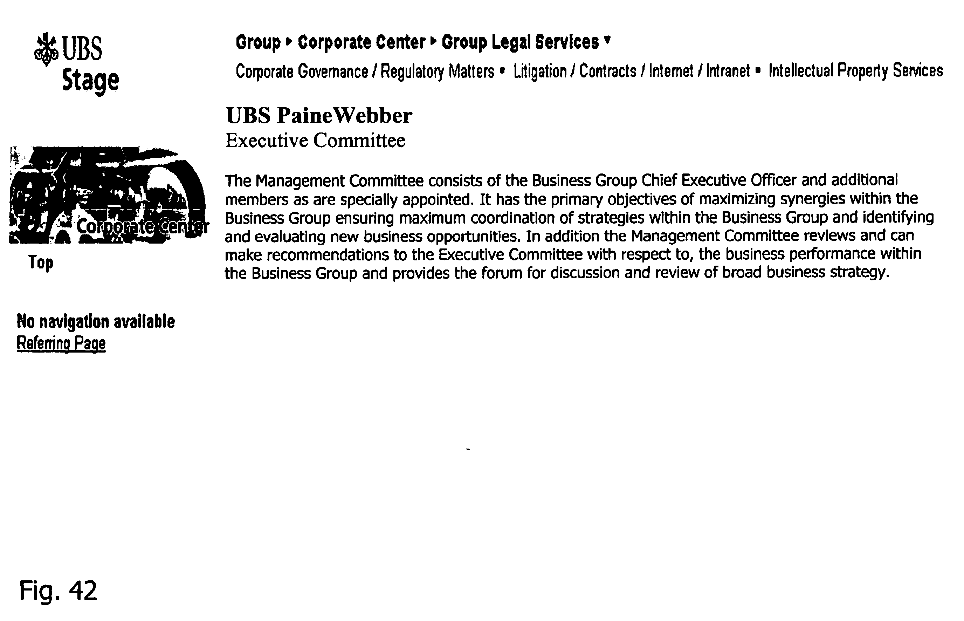

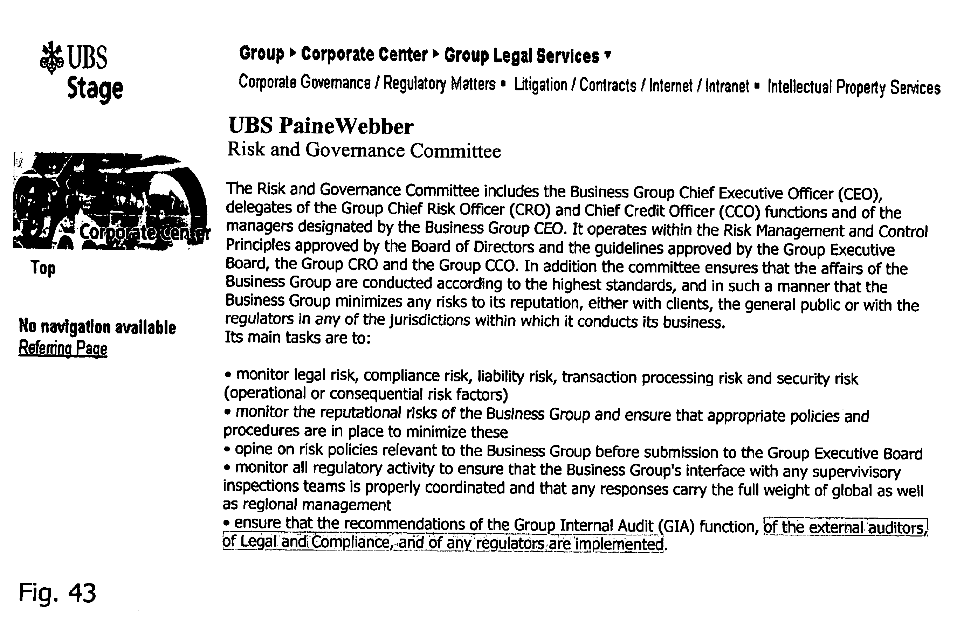

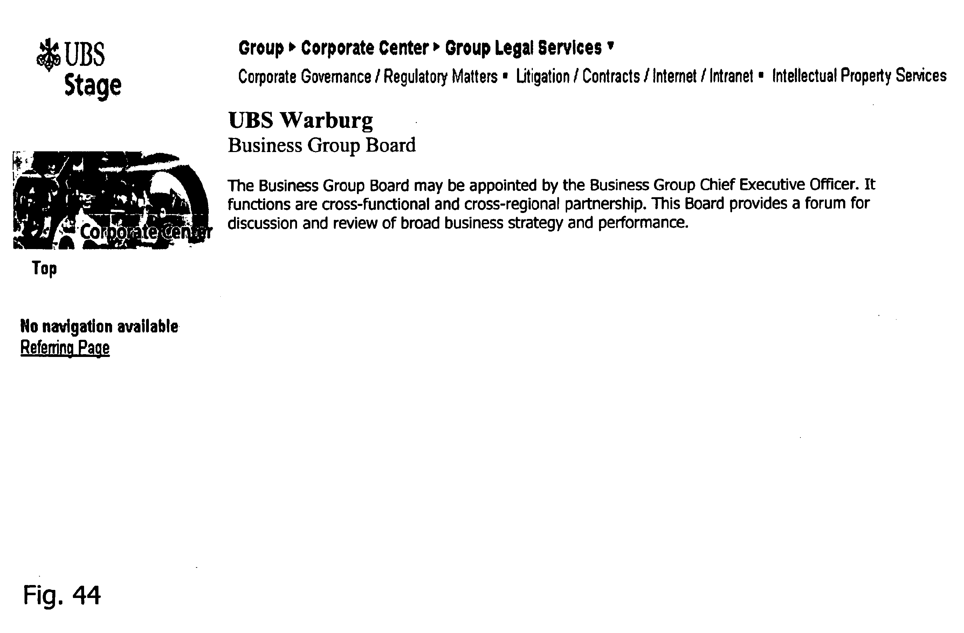

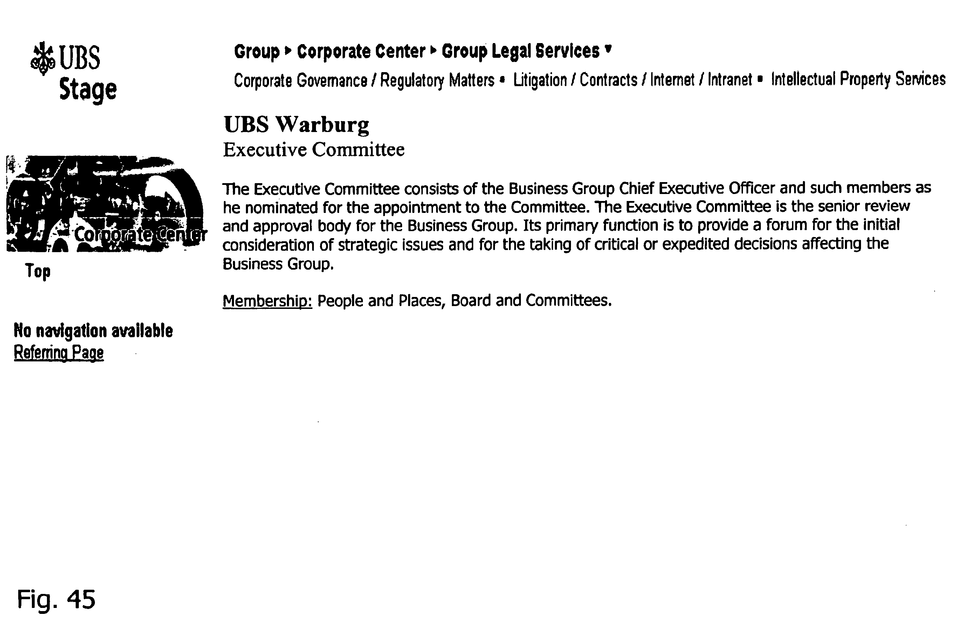

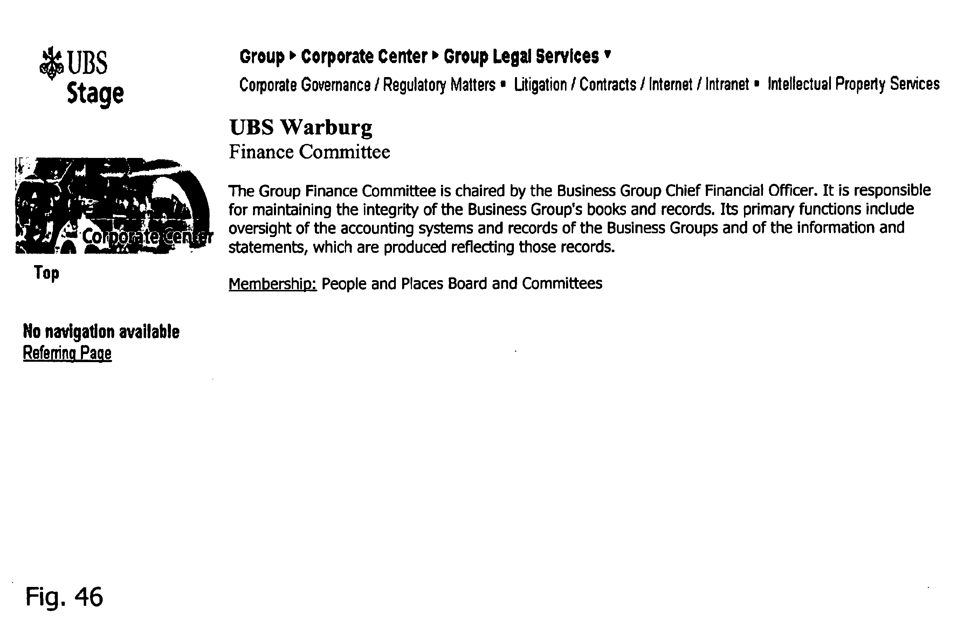

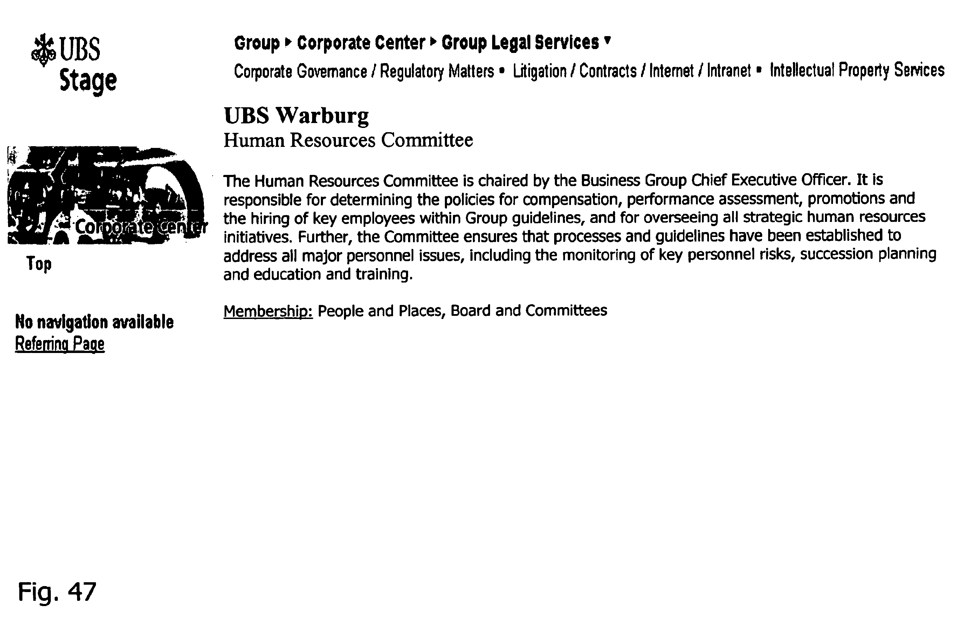

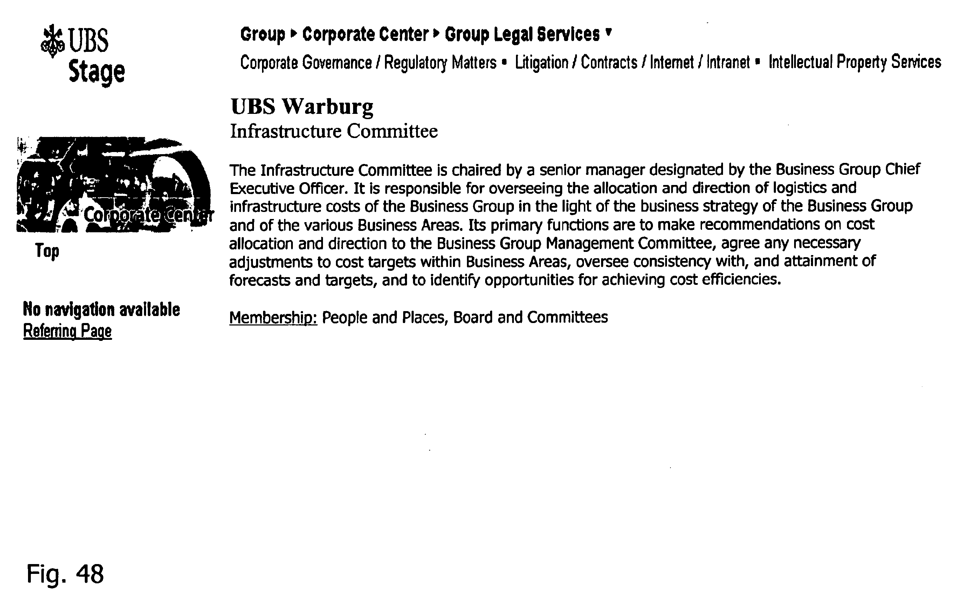

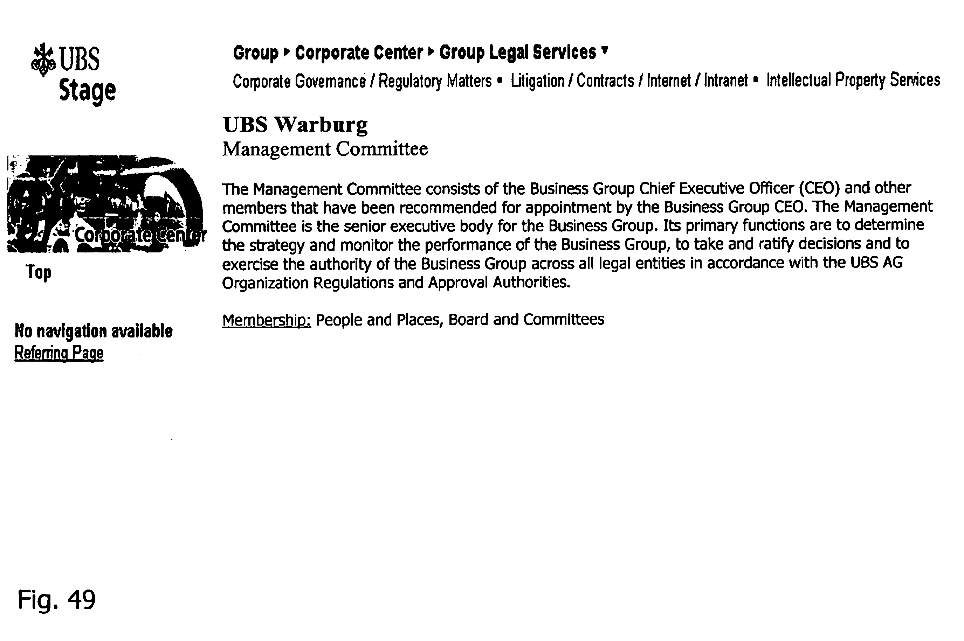

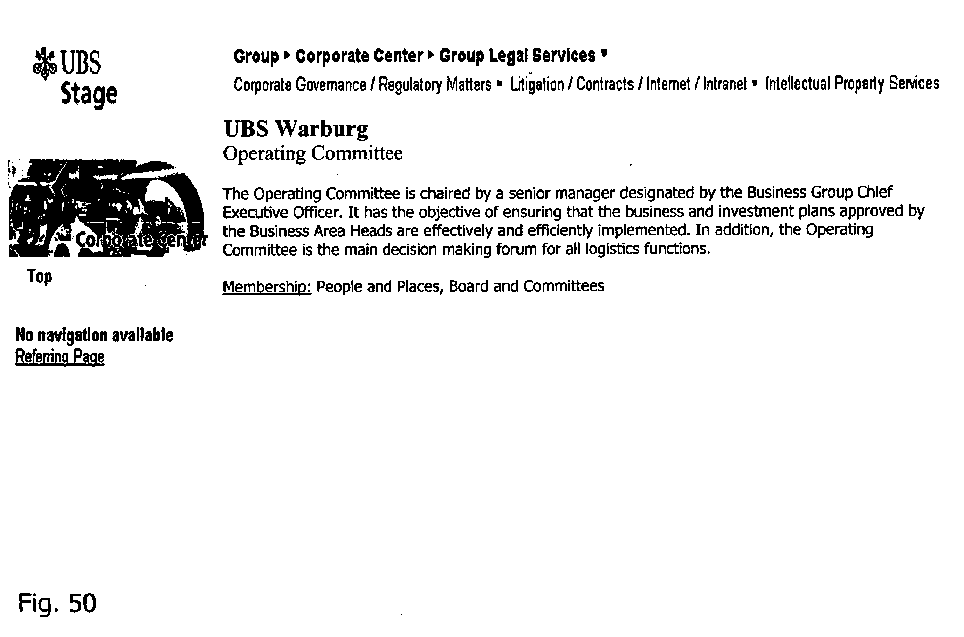

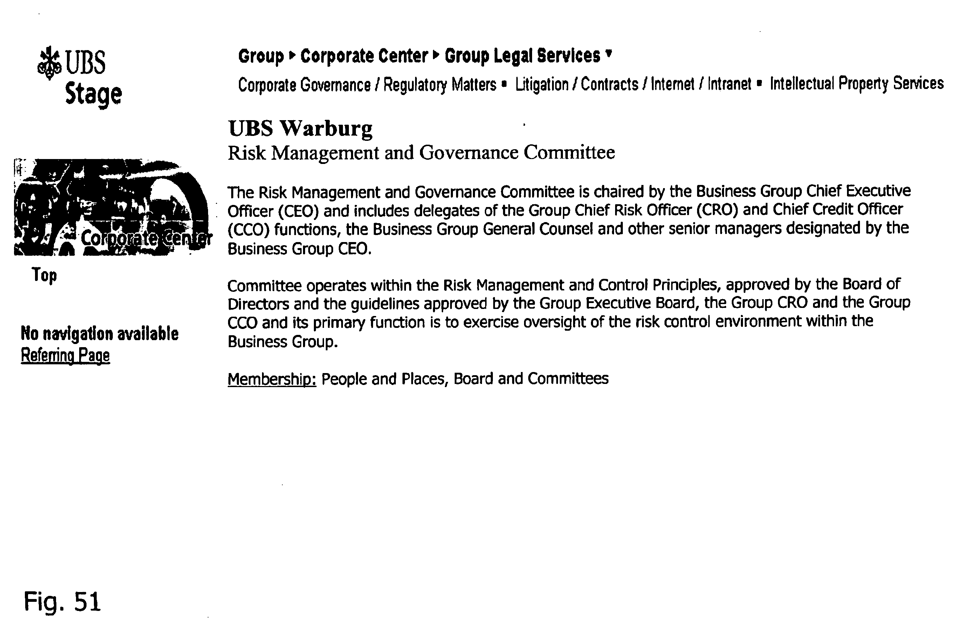

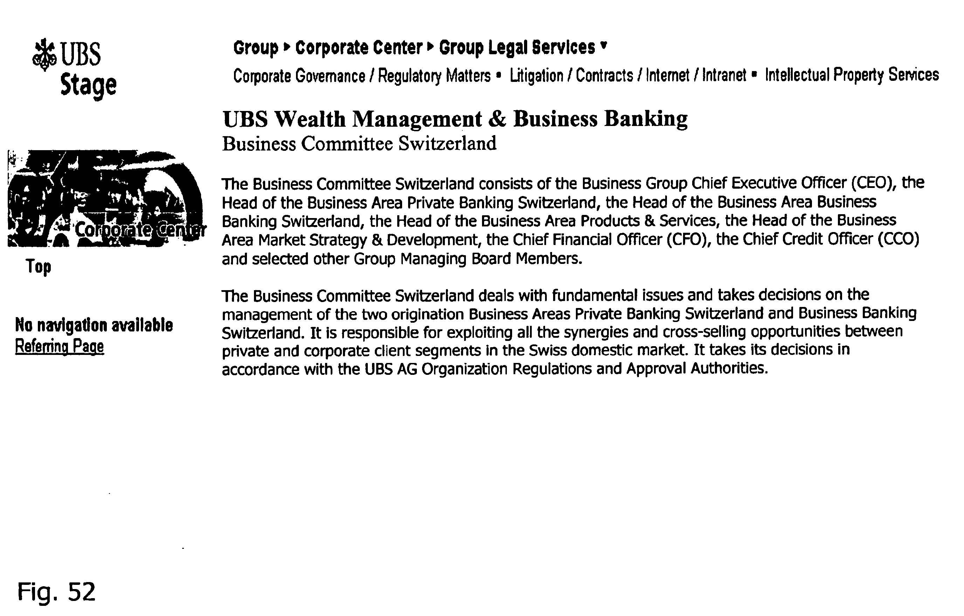

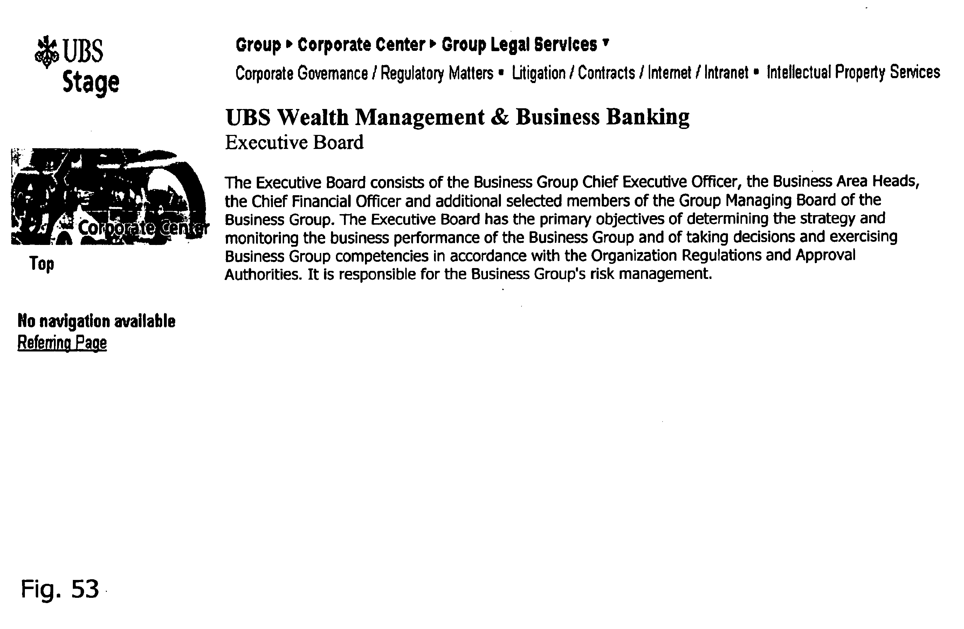

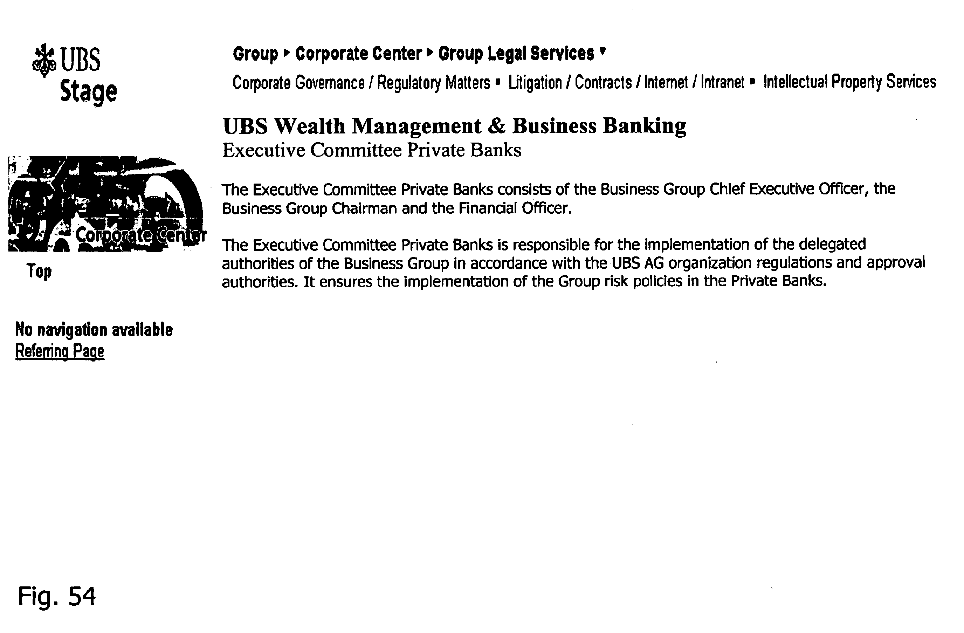

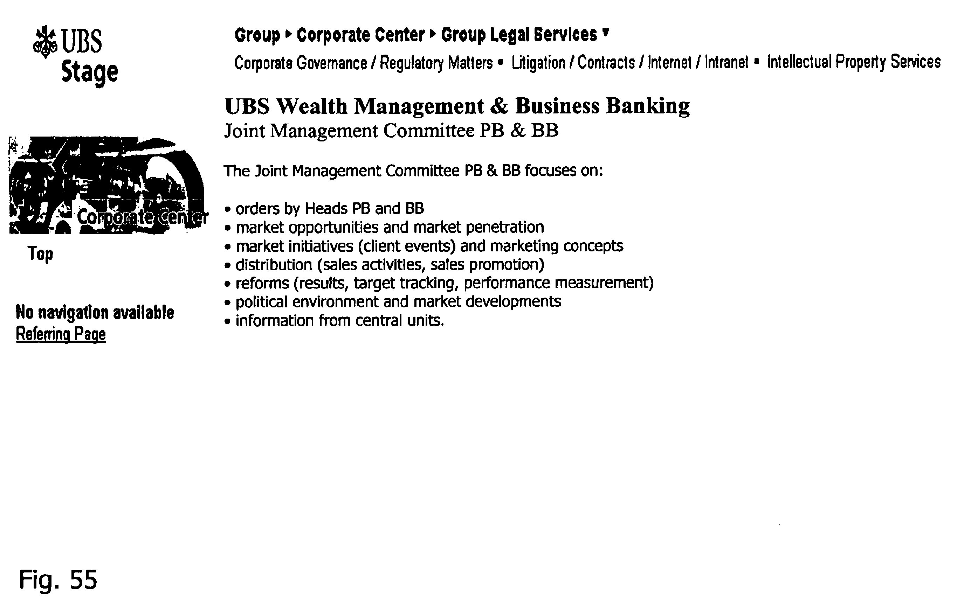

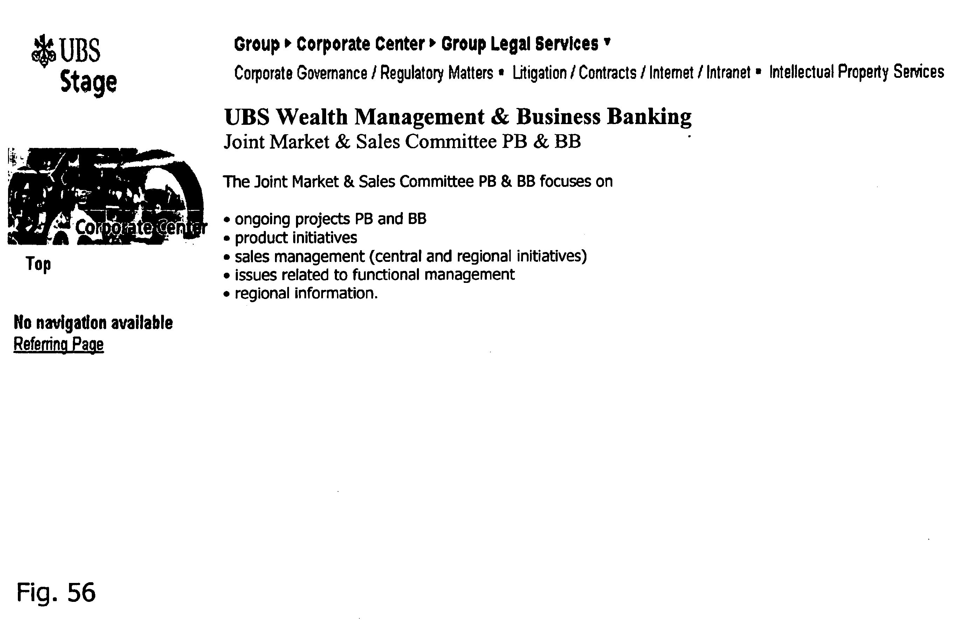

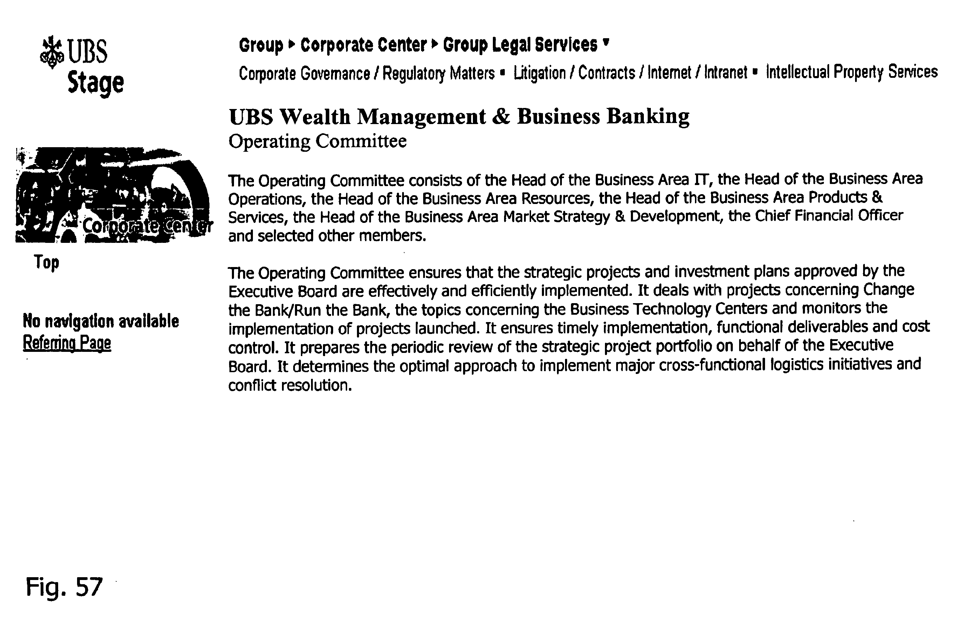

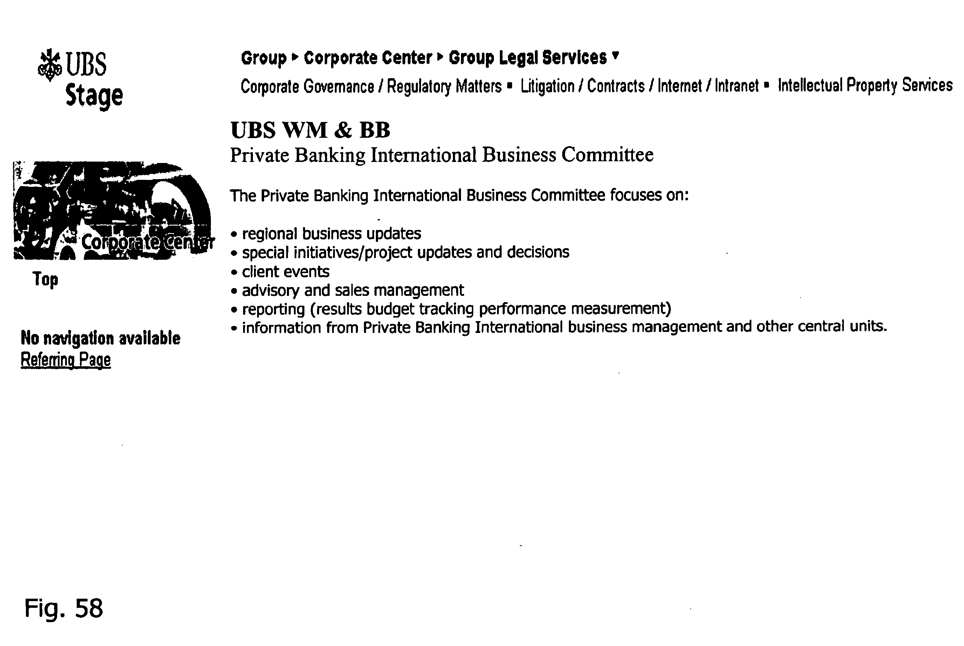

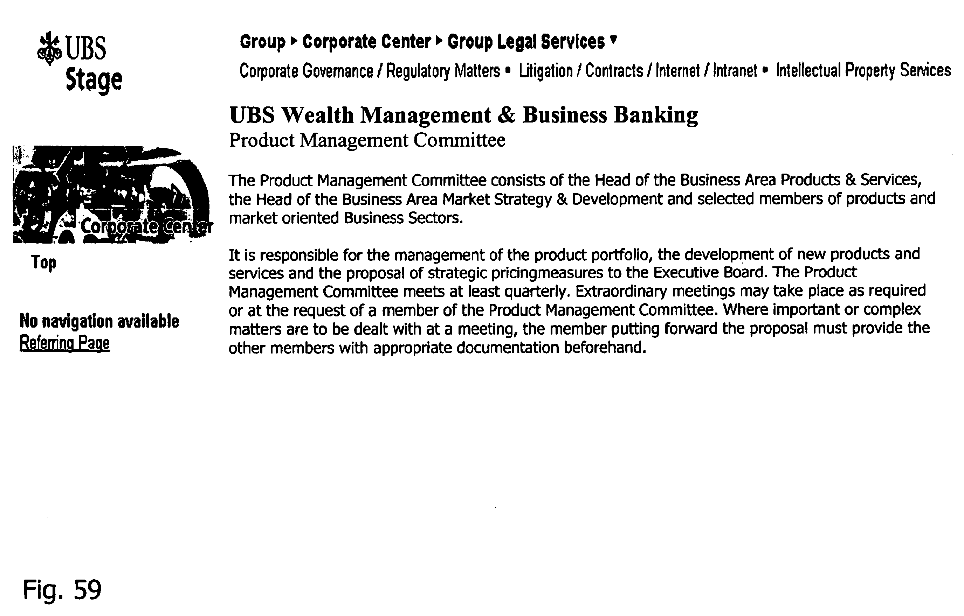

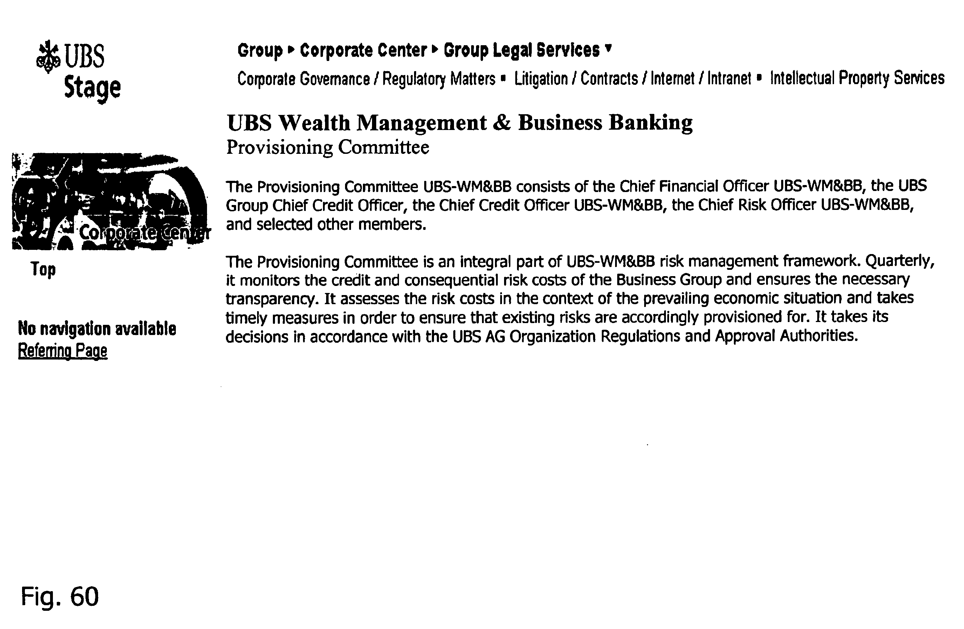

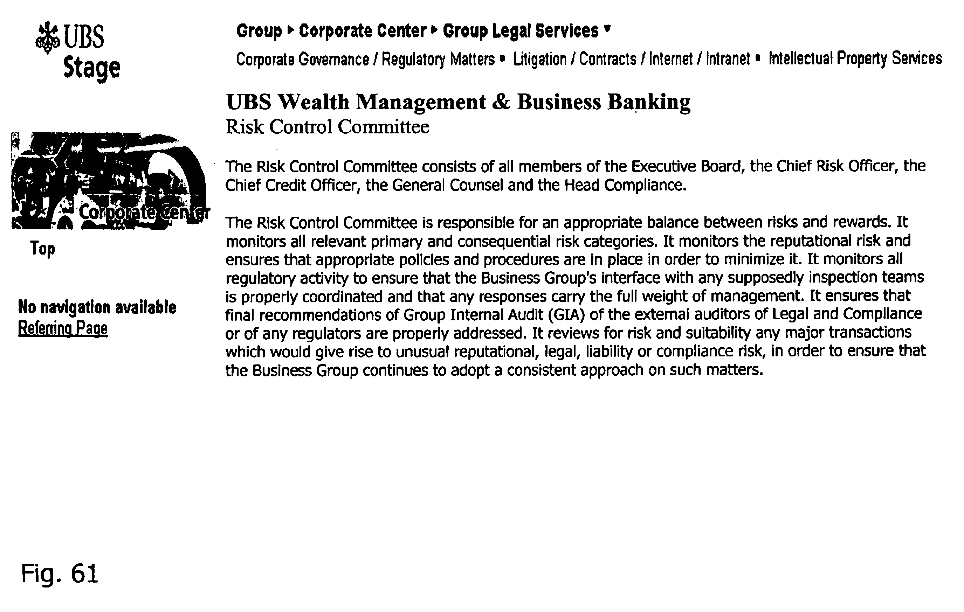

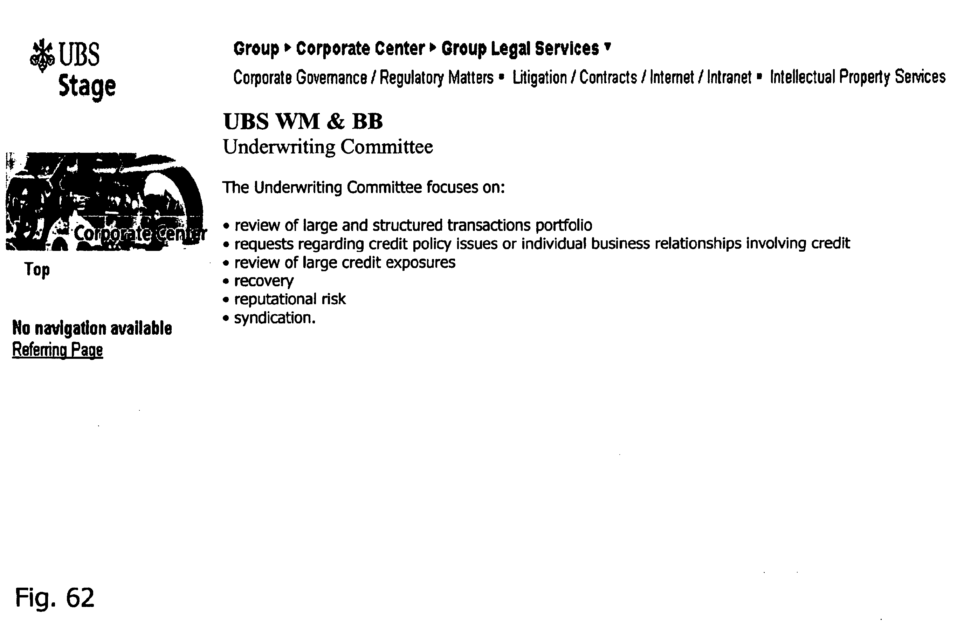

- Figs. 7 to 62: are schematical depictions of GUIs of the invention accessing a web site in the unified database.

### DETAILED DESCRIPTION OF EMBODIMENTS OF THE INVENTION

In the following, the present invention will exemplarily be set forth with respect to a web-based solution erected on a network topology that supports the implementation of a secure and reliable access control mechanism. Although the present invention is particularly suited for handling data that, the network topology and access control mechanisms according to the invention can be implemented regardless of the nature of the data that are hosted, stored, processed, etc.

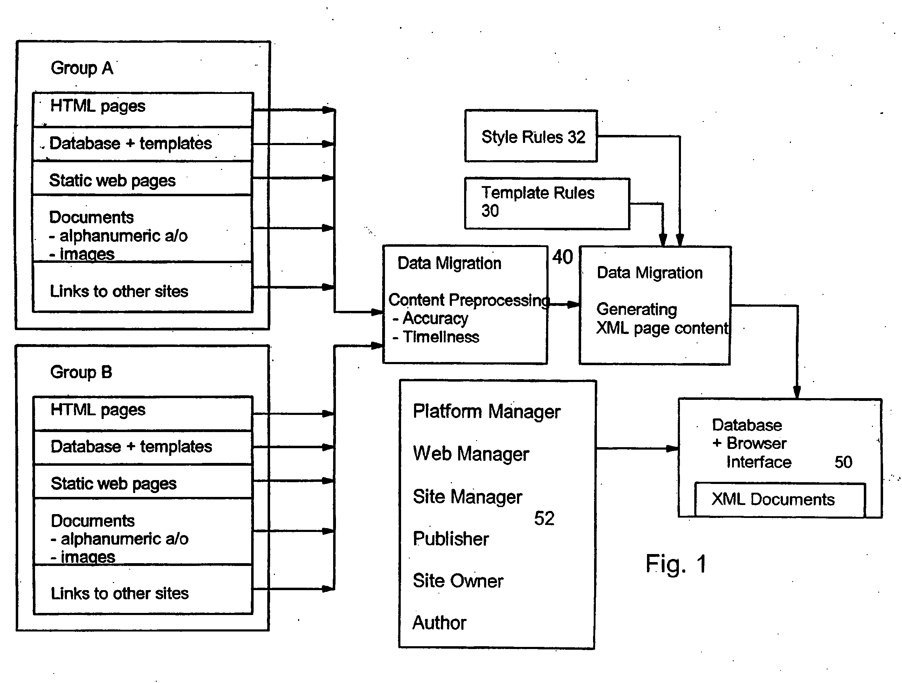

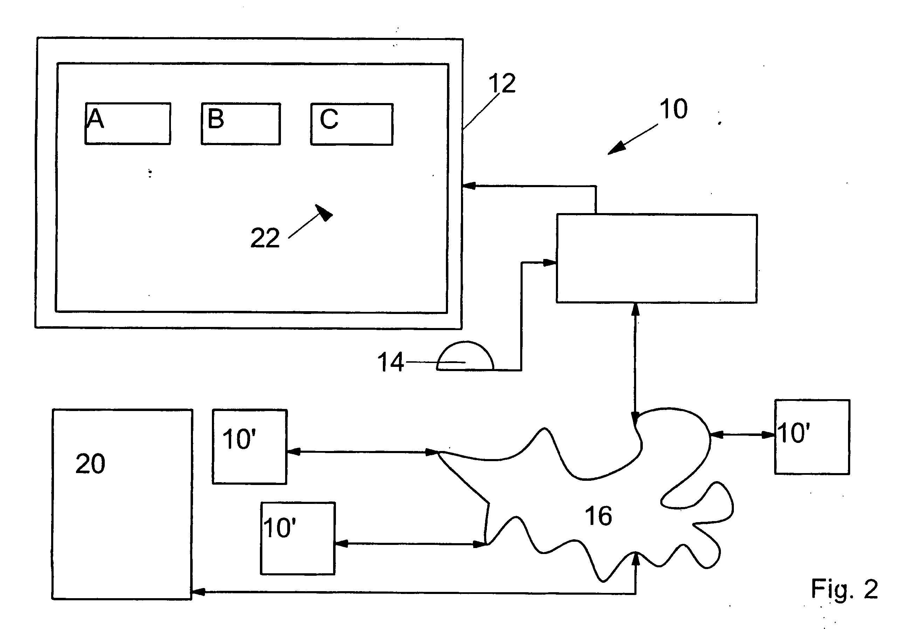

Fig. 1 and 2 show the software and the hardware infrastructure of an embodiment of the invention utilizing a network component 10 that is a computer workstation having a graphical display unit 12 and a graphical input unit 14 e.g. a mouse. This computer workstation 10 is connected to a computer network 16 (a wide area network (WAN), a local area network (LAN) or a combination thereof, for operating an intranet and for providing access to the Internet to which a number of members of a group of similar or identical network components 10' are also connected. In order to operate the unified network-based document management system according to the invention a hosting unit 20 that is a host server having an archival data storage is also connected to this computer network 16 for access by the group of network components 10, 10'. In addition to its server tasks, the hosting unit 20 also provides firewall functions, authenticates the distributed client components connected to the computer network 16.

On the computer workstation 10, a client software application is resident that includes a first program code portion for generating a graphical user interface GUI. The graphical user interface GUI has several control elements, that are so-called buttons (i.e. confined areas) on the display that can be operated by a mouse pointer 22 that follows the movements carried out by the graphical input unit 14.

The client software application provides a first control element, i.e. an above-described button A, on the display for activating a program code portion for electronically initiating a transformation of an electronic dossier originating from one of a number of document platforms, said electronic dossier being provided in a first format and being made available to a number of users of a web site.

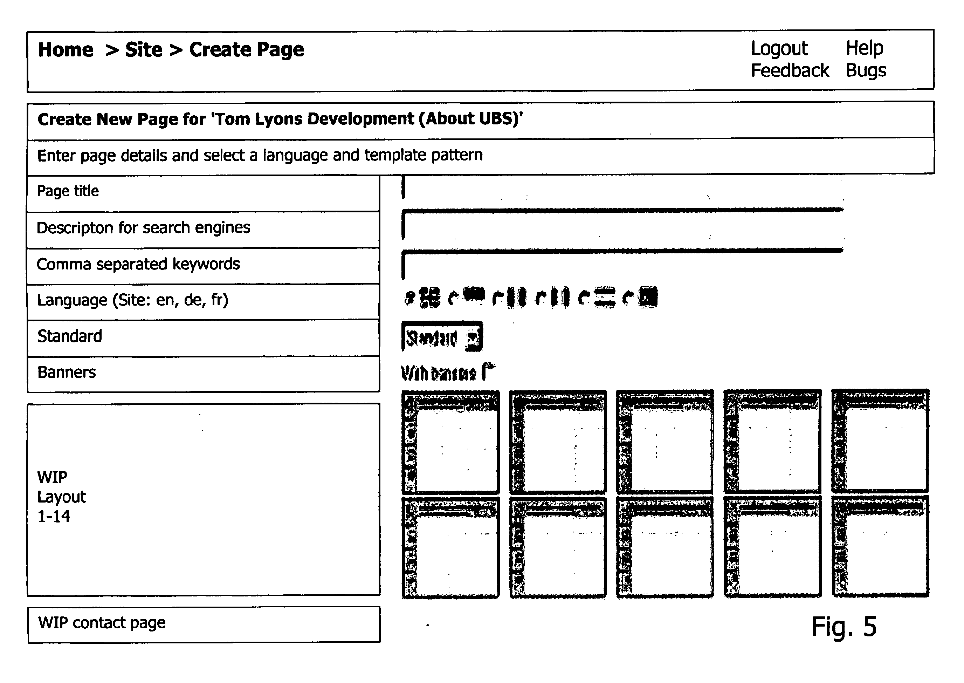

The client software application further includes a program code portion for providing a second control element B, i.e. an above-described button, on the display for electronically obtaining from a predetermined set of templates one template to be correlated to the data of said electronic dossier. The predetermined set of templates (see Fig. 5) is defined in template rules 30 and is stored in a memory accessible by the users in the computer network. Likewise, this program code portion of the client software application program includes a code portion for electronically obtaining from a predetermined set of styles at least a subset of style characteristics to be correlated to the data of said electronic dossier. Similarly, the predetermined set of styles is defined in style rules 32 and is stored in a memory accessible by the users in the computer network. The details thereof are explained hereinafter.

The client software application further includes a program code portion 40 for providing a third control element C, i.e. an above-described button, on the display for initiating an electronically executed migration of the electronic dossier to a document platform having a unified format, and for electronically exporting said electronic dossier together with said suited template and said style subset to a unified database 50. The document platforms from which said electronic dossiers may be and usually are diverse.

Especially in organisations with several business units, divisions, committees etc., the computer network is accessed and used by a number of groups maintaining different sets of document platforms. This is reflected in Fig. 1 by referring to Groups A and B each being in possession of their own electronic dossiers that may be HTML pages, database contents plus templates, static web pages, documents comprising alphanumeric and/ or image data, links to other web sites, XML documents, or the like (see Fig. 1).

The unified database 50 is adapted to store the migrated electronic dossiers together with the obtained template and the obtained style subset. The migrated electronic dossier use XML as the unified format. The contents is stored in the form of information blocks which are independent from the design or the layout of the contents.

Instead of storing the obtained template and the obtained style subset together with each of the migrated electronic dossiers, it is also possible to only store a pointer to the storage location of the obtained template and the obtained style subset together with each of the migrated electronic dossiers. In any case, the migrated electronic dossiers are accessible by a user by means of one of the network components thorough a browser interface by means of a browser installed on his/her network component in order to process, view and/or store the migrated electronic dossiers.

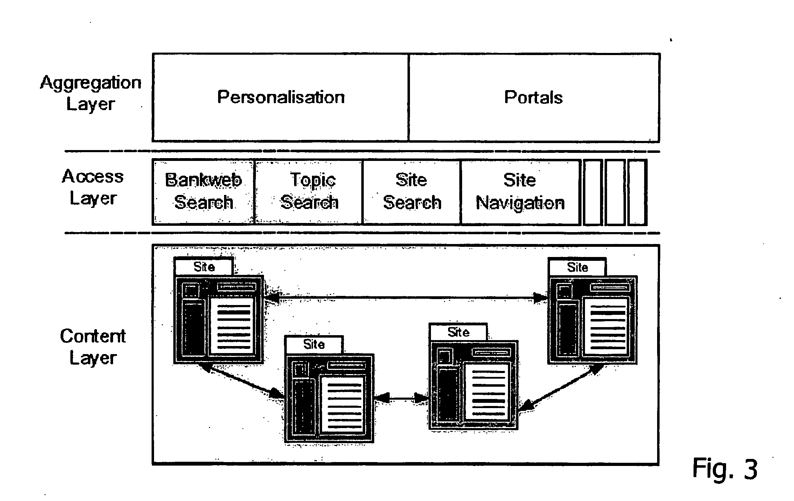

As shown in Fig. 3, the unified information platform implemented and achieved by the document database is divided into three distinct layers with defined interfaces and structures: aggregation layer, access layer and content layer.

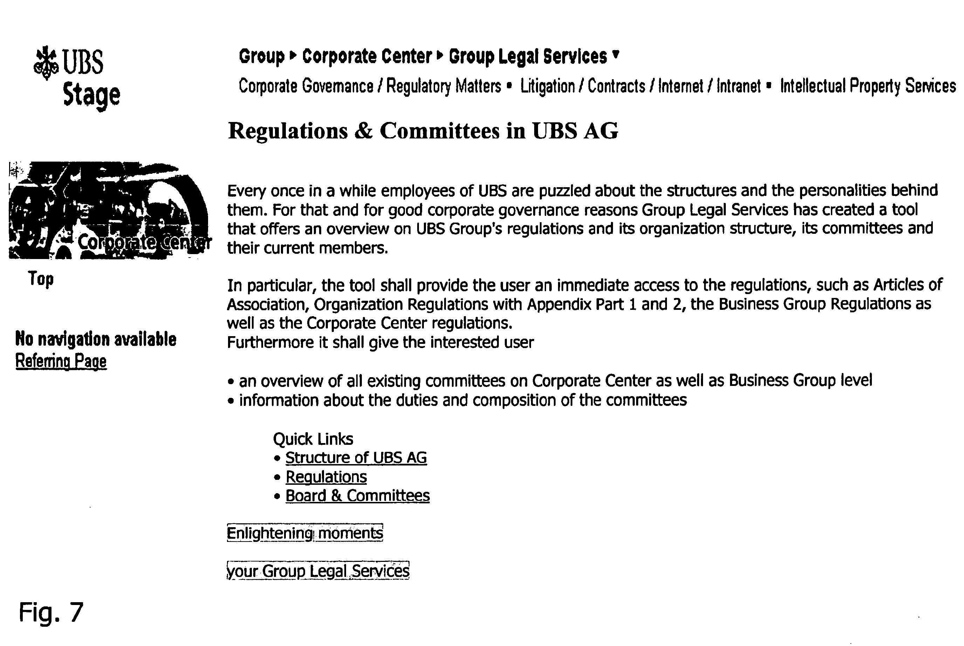

In the layer model, sites of the unified information platform are located in the content layer. Every page of a site of the unified information platform displays a global navigation that reflects its site type. This navigation can be either flat or hierarchical. As mentioned above, the electronic dossiers provided in the unified database are organised as a part of a collection of hierarchically organised pages forming a site describing a product, a service, a process or an organisational unit. The site navigation reflects the organisation/function/presentation of the product, the service, the process or the organisation unit. This is also exemplified by pages of a site called "Regulations & Committees in UBS AG" (see Figs. 7pp.)

### Available site types are:

| | |
|---|---|
| Organisation site: | the home page of an organisation, also called OU (organizational unit) site. |
| Service site: | a site describing a service or product. |
| Project site: | a site describing a larger project. |

OU sites have the hierarchial global navigation. Service sites should not feature an OU navigation since they are not necessarily related to a single organisation. A meaningful global navigation here would be the set of related services. Projects can be classified and organised into subprojects, making it possible to display a hierarchical project navigation.

Sites of the unified information platform can reference each other with normal links within the page content.

In the layer model, inter-site navigation and search is provided in the access layer. This layer contains an extensible set of tools that allow a user to find and access sites or individual pages within these sites. A site browser combines site search and inter-site navigation functionality and can be accessed from every page. This corresponds in principle the a navigation window. The set of tools provided in the access layer is extensible.

The access layer facilitates the access of information on an intranet, but it does not process or bundle this information. A further step is to build a personalized view of the site of the unified information platform which brings information from pages belonging to different sites together. This functionality is provided by the aggregation layer which contains personalization and portal/knowledge management functionality.

The system provides a number of templates that can be utilised in the unified database. (see Fig. 5) Before creating a page, the following item must be defined:

| | |
|---|---|
| **Page title** | For the title of the page. This is the name by which the unified database refers to the page in all searches. |
| **Description for search engines** | This is **meta-information**. When a search is done in the database and this page is found, this text will be shown. This field is **required.** |
| **Keywords** | Here keywords for the page can be entered |
| **Language** | A language for the page is chosen. |
| **Page type** | The page type is chosen. The choices are **Standard,** for normal pages, and **News,** for pages that are meant to be news articles. |
| **Banners** | This field controls wether the page layout should include a banner (a banner is a Title Block with a default banner graphic in it). |
| **Layout 1-14** | One of the 14 standard layouts is chosen as a starting point for the page. |
| **Contact page** | If a **Contact Page** is created, this layout instead of one of |
| | the standard layouts is chosen. |

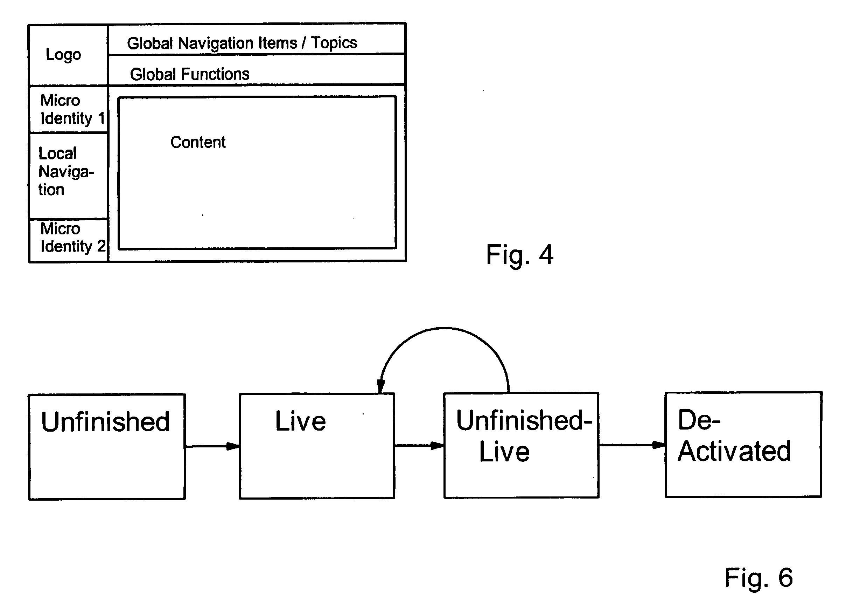

Each template of said predetermined set of templates is comprised of at least three distinct areas (see Fig. 4). By using one of the predefined template of the predetermined set of templates, each of the pages is in line with the template rules. The pages have three distinct areas accessible through said GUI: a top area comprising at least one pointer for a global navigation path, and/or at least one pointer for a global topic; and/or at least one pointer for a global function; a local navigation area comprising at least one pointer for a local navigation path having a predetermined maximum hierarchical navigation depth, and/or at least one pointer for a local page of the web site, and/or at least one pointer for an page of an external web page, and/or at least one micro-identity area; and a content area having a predetermined layout according to said predetermined set of styles. This allows for a consistent appearance of the data to the user "look and feel" facilitating the navigation and retrival of the contents by the users.

The style rules utilised to create and format the content include the text font, the font size and colors on pages on blocks and properties like titles, subtitles, text etc., adjusts spacing between elements like text lines, between text and graphic elements, define colors for backgrounds, and exclude the utilisation of animations or the like.

A main design principle is that the basic unit of publishing is a paragraph. For every paragraph type there is a dedicated editing functionality that hides most of the underlying markup code. An XML DTD (Document Type Definition) is defined for the page content which defines exactly what kind of markup is allowed in which paragraph. As an example, only the following XML tags are admitted and used:

| **Tag** | **Description** |
|---|---|
| <b>...</b> | Bold |
| <i>...</i> | Italic |
| <style id="... ">...</style> | Applying a style (color, font, etc) |
| | to a predefined list of styles. |
| <br> | Line break |
| <p> | Paragraph |
| <space> | White space of a certain width. |
| <link type="...">...</link> | A link to a page. |
| <person ...>...</person> | A person. |
| <email> </email> | An email address |
| <mobile ...>...</mobile> | A handheld number. |
| <product ... >-..</product> | A product (account type, credit card, etc.) |
| <doc ref="... ">...</doc> | A document |

The entirety of electronic dossiers forming a page, the entirety of pages forming a site, and the entireties of sites forming a platform are operated with clear interfaces, competences and rules. To this end, several functions 52 having predetermined authorities, tasks and capabilities are provided (see Fig. 1):
- a platform manager function
- a web manager function
- a site manager function
- a publisher function
- site owner function, and
- an author function.

The platform manager function includes technical programming and development of the unified platform.

The web manager function includes publishing responsibilities for an entire business unit, including creation of web sites, definition of users, authorisation of site managing functions and of publishing functions, accessing web sites with predefined restrictions in their business area, provide information, data and support for publishing activities.

The site manager function including allowing access to publishing functions of predefined sites, definition of local navigation, ascertaining the compliance with said predetermined set of templates and/or said predetermined set of styles.

The publisher function includes the creation and formatting of pages of a web site, creation and insertion of local navigation pointers into pages of a web site, insert graphics on web pages, add text on web pages, effect and changes and updates, define and verify links to pages, publish and de-activate pages.

The site owner function includes the responsibilities for the contents of the web site, effect administrative duties including the definition of guidelines for the provision of a web page in certain languages, the publication format, the period of validity of certain pages of a web site.

The author function including the creation and/or provision of text and graphics, and provision of translations.

Fig. 6 shows a typical publishing cycle of a document on a web page of an unified network-based document database management system. The first status of a document on a web page is Unfinished. This is the status, of a page or navigation that is new, and has never once been set live (or has been deactivated and restored). The second status of a document on a web page is Live. This is the status of a page or navigation that has been published. These pages and navigations are visible on the live site. The third status of a document on a web page is Unfinished-Live. This is the status, of a page or navigation that has been edited. The live site continues to show the last Live version. The page or navigation is set Live again to 'publish' the changes. The status of a page or navigation which is-under development and is tested usually changes between Unfinished-Live and Live. The fourth status of a document on a web page is Deactivated. This is the status, of a page or navigation that has been deactivated. Once deactivated, it may be restored (set to Unfinished again) or permanently deleted.

Fig. 7pp. show how the design principles explained above are put into practice in an actual web site.
- The UBS Logo is presented in the top left corner.
- The top area comprises several pointers for a global navigation path: *Group > Corporate Center > Group Legal Services Group Legal Services* offers several topics: *Corporate Governance* / *Regulatory Matters; Litigation* / *Contracts* / *Internet*/ *Intranet ; Intellectual Property Services* Further, pointers for global functions *Search Navigator Tools Print Email* are provided. Finally, the chosen language *eng* of the web site is indicated.
- The local navigation area comprises the local navigation pointers if they are available. The local navigation has an entry called Top. This is the root navigation of the site. Top is always linked to the welcome page of a site. Further, the local navigation area has two micro-identity areas representing *Corporate Center* and *Group Legal Services*
- The content area has a predetermined layout and refers to "Regulations and Committes in UBS AG".

The design of the navigation is standardized. The colors, fonts and spacing are all controlled by the system.

The navigations are hierarchical. There is a vertical and a horizontal hierarchy. Vertically, the Top navigation is always the first entry.

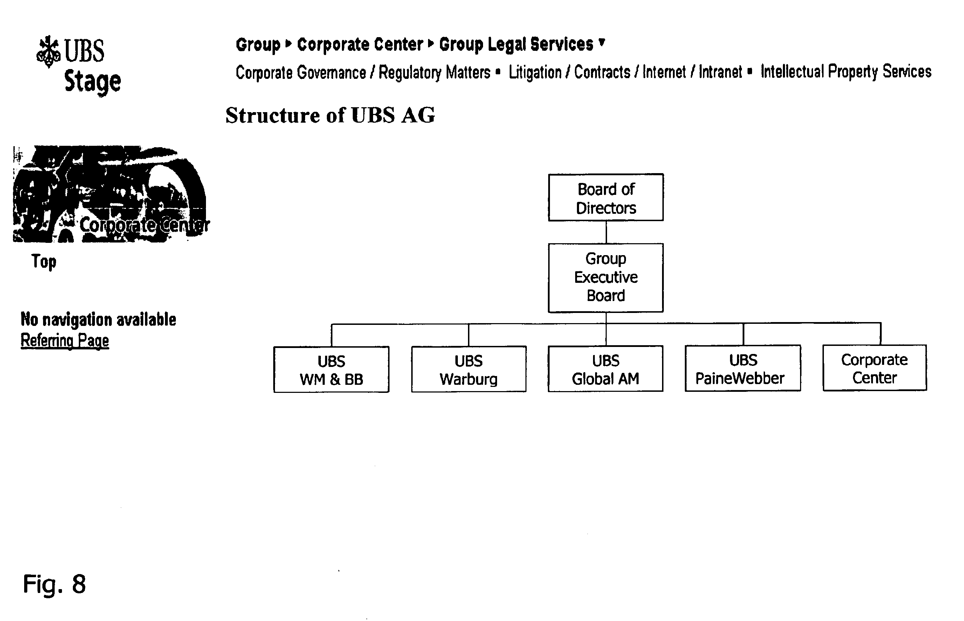

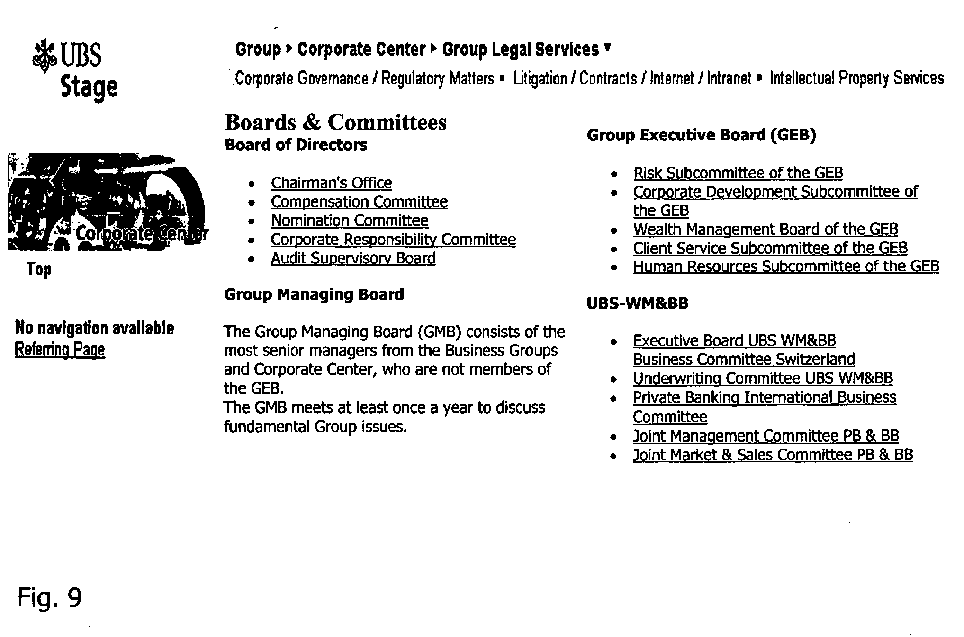

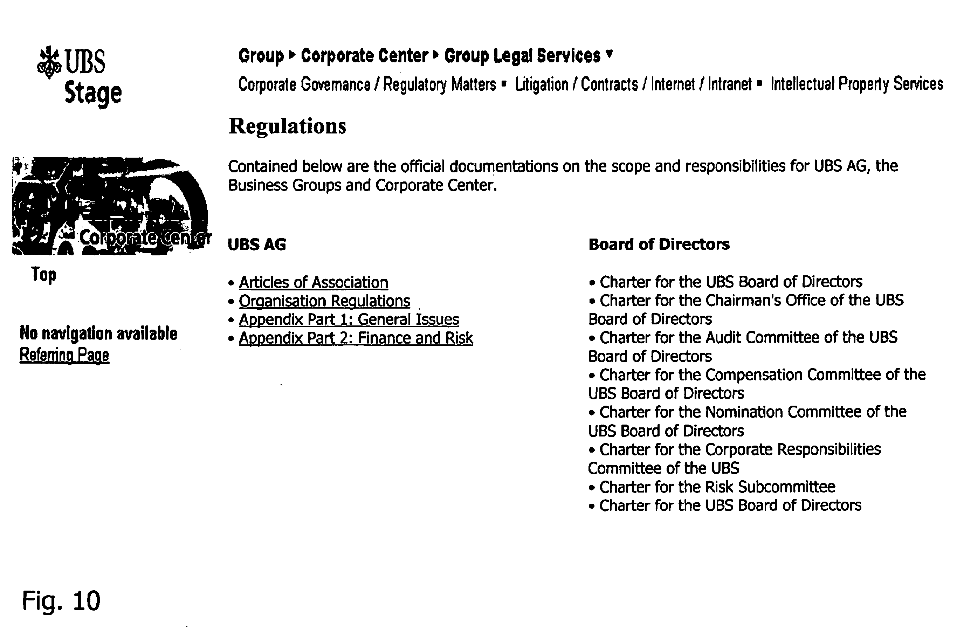

Linking to a wide variety of documents (PDF; WinWord, Excel, PowerPoint, Visio, etc.) is available by pointing with the mouse pointer to the *Quick Links* provided below the right hand image of Fig. 7. The *Quick Links* are POP-UP items pointing to *Structure of UBS AG, Regulations, Board & Committees.* Their appearance is shown in Fig. 8 - 10. When the user follows a document link, the document (e.g. a PDF) will open. The document must be either available via an intranet or reside on a web-server which is available to the unified database (i.e., it must have a URL). Clicking with the mouse pointer on *Structure of UBS AG* will make Fig. 8 pop up. This presents the Structure of UBS AG having a *Board of Directors, a Group Executive Board* and five Business Units: *UBS WM & BB, UBS Warburg, UBS Global AM, UBS PaineWebber, and-Corporate Center.* The structure of UBS AG is reflected and presented by the structure of the web site as can be seen from the further pages shown in the following Figs. It can be followed and contemplated by working through the hierarchical web pages following the links and popup menues revealing links, documents and information about UBS AG.

The above-described embodiments of the invention are intended to be examples of the present invention and alterations and modifications may be effected thereto, by those of ordinary skill in the art, without departing from the scope of the invention which is defined thoroughly by the claims appended hereto.

## Claims

1. A workstation (10) adapted to be connected to a number of members of a group of workstations (10, 10') in a computer network (16) for a unified network-based document management, the computer network (16) further comprising a hosting unit (20) for being accessed by the group of workstations (10, 10'), the workstation (10) comprising at least:
- a client software application resident on the workstation (10), including
- a first program code portion for generating one or more graphical user interfaces (GUIs), one of said graphical user interfaces (GUIs) having at least
-- a first control element (A) for initiating a transformation of an electronic dossier originating from one of a number of document platforms including HTML pages, database contents plus templates, static web pages, documents comprising alphanumeric and/or image data, links to other web sites, or XML documents, said electronic dossier being provided in a first format and being made available to a number of users of a web site;
- a second program code portion for
- - providing a second control element (B) for electronically obtaining from a predetermined set of templates (30) one template to be correlated to the data of said electronic dossier, and
- - electronically obtaining from a predetermined set of styles (32) at least a subset of style characteristics to be correlated to the data of said electronic dossier, and
- a third program code portion (40) for
- - providing a third control element (C) for electronically migrating said electronic dossier to a document platform using XML as a unified format wherein the contents is stored in the form of information blocks which are independent from the design or the layout of the contents, and
- - for electronically exporting said electronic dossier together with said suited template and said style subset to a unified database (50), wherein each of the electronic dossiers provided in the unified database (50) is organised as a part of a collection of hierarchically organized pages forming a site describing a product, a service, a process, or an organizational unit; wherein
- - said unified database (50) is adapted to store said electronic dossier together with said obtained template and said obtained style subset and is accessible by a user by means of one of said workstations (10, 10') through a browser interface by means of a browser installed on at least said one workstation (10, 10') in order to create, author, maintain, manage, view and/or store said electronic dossiers.

2. The workstation (10) according to claim 1, wherein said computer network comprises a number of groups maintaining different sets of document platforms.

3. The workstation (10) according to claim 1 or 2, wherein each template of said predetermined set of templates (30) is comprised of at least three distinct areas accessible through said GUI:
- a top area comprising
-- at least one pointer for a global navigation path, and/or
-- at least one pointer for a global topic; and/or
-- at least one pointer for a global function;
- a local navigation area comprising
- - at least one pointer for a local navigation path having a predetermined maximum hierarchical navigation depth, and/or
- - at least one pointer for a local page of the web site, and/or
- - at least one pointer for an page of an external web page, and/or
- - at least one micro-identity area; and
- a content area having a predetermined layout according to said predetermined set of styles.

4. The workstation (10) according to one of claims 1 to 3, wherein the design rules utilised to create and format include the text font, the font size and colors on pages on blocks and properties like titles, subtitles, text etc., adjusts spacing between elements like text lines, between text and graphic elements, define colors for backgrounds, and exclude the utilisation of animations or the like.

5. The workstation (10) according to one of claims 1 to 4, comprising a program code portion for checking and verifying the contents of the electronic dossier prior to its migration to the document platform having the unified format with regard to its accuracy, timeliness, and relevance to the site.

6. The workstation (10) according to one of claims 1 to 5, comprising (52)
- a platform manager function, said platform manager function including technical programming and development of the unified platform, and/or
- a web manager function, said web manager function including publishing responsibilities for an entire business unit, including creation of web sites, definition of users, authorisation of site managing functions and of publishing functions, accessing web sites with predefined restrictions in their business area, provide information, data and support for publishing activities, and/or
- a site manager function, said site manager function including allowing access to publishing functions of predefined sites, definition of local navigation, ascertaining the compliance with said predetermined set of templates and/or said predetermined set of styles, and/or
- a publisher function, said publisher function includes the creation and formatting of pages of a web site, creation and insertion of local navigation pointers into pages of a web site, insert graphics on web pages, add text on web pages, effect and changes and updates, define and verify links to pages, publish and de-activate pages; and/or
- a site owner function, said site owner function includes the responsibilities for the contents of the web site, effect administrative duties including the definition of guidelines for the provision of a web page in certain languages, the publication format, the period of validity of certain pages of a web site, and/or
- an author function, said author function including the creation and/or provision of text and graphics, and provision of translations.

7. The workstation (10) according to one of claims 1 to 6, comprising a program code portion automatically effecting a language management function that substitutes a web page not existing in a certain requested language by an available language version of this web page according to a predefined priority scheme.

8. The workstation (10) according to one of claims 1 to 7, comprising a program code portion automatically effecting
- a receiving of feedback information about a web page or a web site from a user, and
- a routing of said feedback information to a database accessible by the responsible of such web page or a web site, and
- an entering of said feedback information into said database.

9. The workstation (10) according to one of claims 1 to 8, comprising a program code portion providing access of web sites to an integrated image library, with the integrated image library having a hierarchical organisation allowing for the distinction of globally valid images from those that are to be used only within one site.

10. The workstation (10) according to one of claims 1 to 9, comprising a program code portion effecting
- automatic checks of links depending on the link type, and/or
- automatic content expiration of web pages or web sites, and/or
- automatic detection of orphaned contents or sites, and/or
- automatic detection of accounts of users trying to access web pages or web sites the authorisation of which has expired.

11. The workstation (10) according to one of claims 1 to 10, comprising a program code portion effecting an
- automatic scanning of migrated electronic dossiers for extracting document related meta information,
- automatic attaching of said extracted document related information to said document for search and retrieval by users of said unified database.

12. A computer program product comprising program code portions for implementing the functionality of the client software application of any one of the preceding claims when the computer program product is executed on a computer workstation.

13. The computer program product of claim 12, stored on a computer readable recording medium.

## Patentansprüche

1. Arbeitsplatz (10), der dazu geeignet ist, mit einer Zahl von Mitgliedern einer Gruppe von Arbeitsplätzen (10, 10') in einem Computernetzwerk (16) zur einheitlichen netzwerk-basierten Dokumentenverwaltung verbunden zu sein, wobei das Computernetzwerk (16) zudem eine Hostingeinheit (20) umfasst, auf die die Gruppe von Arbeitsplätzen (10, 10') Zugriff hat, und wobei der Arbeitsplatz (10) mindestens umfasst:
- ein Arbeitsplatz (10)-residente Client-Softwareanwendung, umfassend
- einen ersten Programmcodeteil zum Erzeugen einer oder mehrerer graphischer Benutzerschnittstellen (GUIs), wobei eine der graphischen Benutzerschnittstellen (GUIs) mindestens
o ein erstes Steuerelement (A) zum Auslösen einer Transformation eines elektronischen Dossiers aufweist, welches einer Zahl von Dokumentenplattformen entstammt, die HTML-Seiten, Datenbankinhalte und -vorlagen, statische Netzseiten, Dokumente mit alphanumerischen Daten und/oder Bilddaten, Verknüpfungen zu anderen Netzplätzen oder XML-Dokumente umfassen, wobei das elektronische Dossier in einem ersten Format bereitsteht und einer Zahl von Benutzern eines Netzplatzes zugänglich gemacht ist;
- einen zweiten Programmcodeteil zum
o Bereitstellen eines zweiten Steuerelements (B) zum elektronischen Beschaffen einer Vorlage aus einem vorgegebenen Set von Vorlagen (30), welche mit den Daten des elektronischen Dossiers in Beziehung zu setzen ist, und
o elektronischen Beschaffen zumindest einer Teilmenge von Stileigenschaften aus einem vorgegebenen Set von Stilen (32), die mit den Daten des elektronischen Dossiers in Beziehung zu setzen ist, und
- einen dritten Programmcodeteil (40) zum
o Bereitstellen eines dritten Steuerelements (C) zum elektronischen Migrieren des elektronischen Dossiers zu einer Dokumentenplattform unter Verwendung von XML als vereinheitlichtes Format, wobei der Inhalt in Form von Informationsblocks gespeichert wird, die von dem Design oder dem Layout des Inhalts unabhängig sind, und
o elektronischen Exportieren des elektronischen Dossiers zusammen mit der geeigneten Vorlage und der Stilteilmenge zu einer vereinheitlichten Datenbank (50), wobei jedes der in der einheitlichen Datenbank (50) bereitgestellten elektronischen Dossiers als Teil einer Sammlung von hierarchisch organisierten Seiten organisiert ist, die einen Platz bildet, der ein Produkt, eine Dienstleistung, einen Prozess oder eine Organisationseinheit beschreibt; wobei
o die vereinheitlichte Datenbank (50) dazu geeignet ist, das elektronische Dossier zusammen mit der beschafften Vorlage und der beschafften Stilteilmenge zu speichern, und für einen Benutzer mittels eines der Arbeitsplätze (10, 10') durch eine Browserschnittstelle mittels eines auf zumindest einem der Arbeitsplätze (10, 10') installierten Browsers zugänglich ist, um die elektronischen Dossiers zu erstellen, zu verfassen, zu führen, zu verwalten, anzusehen und/oder zu speichern.

2. Arbeitsplatz (10) nach Anspruch 1, wobei das Computernetzwerk eine Zahl von Gruppen umfasst, die verschiedene Sets von Dokumentenplattformen führen.

3. Arbeitsplatz (10) nach Anspruch 1 oder 2, wobei jede Vorlage des vorgegebenen Sets von Vorlagen (30) von mindestens drei verschiedenen Bereichen umfasst ist, die durch die GUI zugänglich sind:
- einem oberen Bereich, umfassend
o mindestens einen Zeiger für einen globalen Navigationspfad und/oder
o mindestens einen Zeiger für einen globalen Oberbegriff und/oder
o mindestens einen Zeiger für eine globale Funktion;
- einen lokalen Navigationsbereich, umfassend
o mindestens einen Zeiger für einen lokalen Navigationspfad mit einer vorgegebenen, maximalen hierarchischen Navigationstiefe und/oder
o mindestens einen Zeiger für eine lokale Seite des Netzplatzes und/oder
o mindestens einen Zeiger für eine Seite einer externen Netzseite und/oder
o mindestens einen Mikroidentitätsbereich; und
- einen Inhaltsbereich mit einem vorgegebenen Layout gemäß dem vorgegebenen Stileset.

4. Arbeitsplatz (10) nach einem der Ansprüche 1 bis 3, wobei die zum Erstellen und Formatieren verwendeten Designregeln den Zeichensatz, die Schriftgröße und - farben auf Seiten auf Blöcken und Eigenschaften wie Titel, Untertitel, Text etc. umfassen, den Abstand zwischen Elementen, wie Textzeilen, und zwischen Text und Graphikelementen anpassen, Farben für Hintergründe festlegen und die Verwendung von Animationen oder dergleichen ausschließen.

5. Arbeitsplatz (10) nach einem der Ansprüche 1 bis 4, umfassend einen Programmcodeteil zum Überprüfen und Verifizieren des Inhalts des elektronischen Dossiers vor dessen Migration zu der Dokumentenplattform, die hinsichtlich ihrer Exaktheit, Aktualität und Relevanz des Platzes ein vereinheitlichtes Format aufweist.

6. Arbeitsplatz (10) nach einem der Ansprüche 1 bis 5, umfassend (52)
- eine Plattformverwaltungsfunktion, die technisches Programmieren und Entwickeln der einheitlichen Plattform umfasst, und/oder
- eine Netzverwaltungsfunktion, die Bekanntgabe von Verantwortlichkeiten für eine ganze Betriebseinheit, Erstellen von Netzplätzen, Festlegen von Benutzern, Autorisieren von Platzverwaltungsfunktionen und von Bekanntgabefunktionen, Zugreifen auf Netzplätze mit vordefinierten Beschränkungen in ihrem Betriebsbereich, Bereitstellen von Informationen, Daten und Unterstützung für Bekanntgabeaktivitäten umfasst, und/oder
- eine Platzverwaltungsfunktion, die Zugangszulassung zu Bekanntgabefunktionen von vordefinierten Plätzen, Festlegen lokaler Navigation, Ermitteln der Einhaltung des vorgegebenen Vorlagensets und/oder des vorgegebenen Stilesets umfasst, und/oder
- eine Bekanntgabefunktion, die das Erstellen und Formatieren von Seiten eines Netzplatzes, Erstellen und Einfügen lokaler Navigationszeiger in Seiten eines Netzplatzes, Einsatz von Graphiken auf Netzseiten, Anfügen von Text auf Webseiten, Wirkung und Wechsel und Verbesserungen, Festlegen und Verifizieren von Verknüpfungen zu Seiten, Bekanntgabe und Deaktivieren von Seiten umfasst; und/oder
- eine Platzinhaberfunktion, die die Verantwortlichkeit für den Inhalt des Netzplatzes, die Auswirkung auf administrative Pflichten, umfassend die Festlegung von Richtlinien für die Bereitstellung einer Webseite in bestimmten Sprachen, das Bekanntgabeformat und die Gültigkeitszeitspanne bestimmter Seiten eines Netzplatzes umfasst, und/oder
- eine Autorfunktion, die das Erstellen und/oder Bereitstellen von Text und Graphiken und das Bereitstellen von Übersetzungen umfasst.

7. Arbeitsplatz (10) nach einem der Ansprüche 1 bis 6, umfassend einen Programmcodeteil, der automatisch eine Sprachverwaltungsfunktion auslöst, die eine nicht in einer bestimmten, angeforderten Sprache existierende Netzseite durch eine verfügbare Sprachenversion dieser Netzseite entsprechend einem vordefinierten Prioritätsschema ersetzt.

8. Arbeitsplatz (10) nach einem der Ansprüche 1 bis 7, umfassend einen Programmcodeteil, der automatisch
- ein Empfangen von Rückmeldungsinformationen über eine Netzseite oder einen Netzplatz von einem Benutzer, und
- ein Leiten der Rückmeldungsinformationen zu einer Datenbank, die für den Verantwortlichen einer solchen Netzseite oder eines solchen Netzplatzes zugänglich ist, und
- ein Eintragen der Rückmeldungsinformationen in die Datenbank auslöst.

9. Arbeitsplatz (10) nach einem der Ansprüche 1 bis 8, umfassend einen Programmcodeteil, der Zugang von Netzplätzen zu einer integrierten Bildbibliothek bereitstellt, wobei die integrierte Bildbibliothek eine hierarchische Organisation aufweist, die die Unterscheidung von global gültigen Bildern von denjenigen erlaubt, die nur innerhalb eines Platzes zu benutzen sind.

10. Arbeitsplatz (10) nach einem der Ansprüche 1 bis 9, umfassend einen Programmcodeteil, der
- automatische Überprüfungen von Verknüpfungen abhängig von dem Verknüpfungstyp und/oder
- automatischen Inhaltsablauf von Netzseiten oder Netzplätzen und/oder
- automatische Erkennung von verwaistem Inhalt oder verwaisten Plätzen und/oder
- automatische Erkennung von Konten von Benutzern, die versuchen auf Netzseiten oder Netzplätze zuzugreifen, deren Autorisierung abgelaufen ist, auslöst.

11. Arbeitsplatz (10) nach einem der Ansprüche 1 bis 10, umfassend einen Programmcodeteil, der
- automatisches Abtasten von migrierten elektronischen Dossiers zum Extrahieren von dokumentbezogenen Meta-Informationen,
- automatisches Anhängen der extrahierten dokumentbezogenen Informationen an das Dokument zum Suchen und Auffinden durch Benutzer der einheitlichen Datenbank.

12. Computerprogrammprodukt, umfassend Programmcodeteile zum Implementieren der Funktionalität der Client-Softwareanwendung eines der vorangegangenen Ansprüche, wenn das Computerprogrammprodukt an einem Computerarbeitsplatz angewendet wird.

13. Computerprogrammprodukt nach Anspruch 12, gespeichert auf einem computerlesbaren Aufnahmemedium.

## Revendications

1. Station de travail (10) adaptée pour être connectée à un nombre d'éléments d'un groupe de stations de travail (10, 10') dans un réseau informatique (16) pour une gestion de documents basée sur un réseau unifié, le réseau informatique (16) comprenant en outre une unité d'hébergement (20) à laquelle on peut accéder par le groupe de stations de travail (10, 10'), la station de travail (10) comprenant au moins :
- une application de logiciel client résidant sur la station de travail (10), comprenant
- une première partie de code de programme destiné à générer une ou plusieurs interfaces utilisateurs graphiques (GUI), l'une desdites interfaces utilisateurs graphiques (GUI) comportant au moins
-- un premier élément de commande (A) destiné à lancer une transformation d'un dossier électronique provenant de l'une d'un nombre de plates-formes de documents comprenant des pages HTML, des contenus de bases de données plus des modèles, des pages Web statiques, des documents comprenant des données d'images et/ou alphanumériques, des liens vers d'autres sites Web, ou des documents XML, ledit dossier électronique étant délivré dans un premier format et étant rendu disponible pour un nombre d'utilisateurs d'un site Web ;
- une deuxième partie de code de programme destinée à
-- fournir un deuxième élément de commande (B) pour obtenir de manière électronique depuis un ensemble de modèles prédéterminé (30) un modèle devant être mis en corrélation avec les données dudit dossier électronique, et
-- obtenir de manière électronique depuis un ensemble de styles prédéterminé (32) au moins un sous-ensemble de caractéristiques de styles devant être mis en corrélation avec les données dudit dossier électronique, et
- une troisième partie de code de programme (40) destinée à
-- fournir un troisième élément de commande (C) pour la migration électronique dudit dossier électronique vers une plate-forme de documents en utilisant le format XML en tant que format unifié dans laquelle les contenus sont stockés sous la forme de blocs d'informations qui sont indépendants de la conception ou de la configuration des contenus, et
-- exporter de manière électronique ledit dossier électronique conjointement avec ledit modèle approprié et ledit sous-ensemble de styles vers une base de données unifiée (50), dans laquelle chacun des dossiers électroniques délivrés dans la base de données unifiée (50) est organisé comme une partie d'une collecte de pages organisées de manière hiérarchique formant un site décrivant un produit, un service, un processus ou une unité organisationnelle ; dans laquelle
-- ladite base de données unifiée (50) est adaptée pour stocker ledit dossier électronique conjointement avec ledit modèle obtenu et ledit sous-ensemble de styles obtenu et est accessible par un utilisateur au moyen de l'une desdites stations de travail (10, 10') par l'intermédiaire d'une interface de navigation au moyen d'un navigateur installé sur au moins ladite une station de travail (10, 10') afin de créer, d'écrire, de maintenir, de gérer, de voir et/ou de stocker lesdits dossiers électroniques.

2. Station de travail (10) selon la revendication 1, dans laquelle ledit réseau informatique comprend un nombre de groupes maintenant différents ensembles de plates-formes de documents.

3. Station de travail (10) selon la revendication 1 ou 2, dans laquelle chaque modèle dudit ensemble de modèles prédéterminé (30) est composé d'au moins trois zones distinctes accessibles par l'intermédiaire de ladite interface utilisateur graphique :
- une zone supérieure comprenant
-- au moins un pointeur pour un chemin d'accès de navigation globale, et/ou
-- au moins un pointeur pour un sujet global ; et/ou
-- au moins un pointeur pour une fonction globale ;
- une zone de navigation locale comprenant
-- au moins un pointeur pour un chemin d'accès de navigation locale présentant une profondeur de navigation hiérarchique maximale prédéterminée, et/ou
-- au moins un pointeur pour une page locale du site Web, et/ou
-- au moins un pointeur pour une page d'une page Web externe, et/ou
-- au moins une zone de micro-identité ; et
- une zone de contenu présentant une configuration prédéterminée conformément audit ensemble de styles prédéterminé.

4. Station de travail (10) selon l'une quelconque des revendications 1 à 3, dans laquelle les règles de conception utilisées pour créer et mettre en forme comprennent la police de caractères du texte, la taille de la police de caractères et la couleur sur les pages sur les blocs et paramétrages comme les titres, les sous-titres, le texte, etc., l'ajustement de l'espacement entre des éléments tels que les lignes de texte, entre le texte et les éléments graphiques, la définition des couleurs des arrière-plans, et excluent l'utilisation d'animations ou analogues.

5. Station de travail (10) selon l'une quelconque des revendications 1 à 4, comprenant une partie de code de programme destinée à contrôler et à vérifier les contenus du dossier électronique avant sa migration vers la plate-forme de documents présentant le format unifié par rapport à sa précision, son opportunité et sa pertinence sur le site.

6. Station de travail (10) selon l'une quelconque des revendications 1 à 5, comprenant (52)
- une fonction de gestion de plate-forme, ladite fonction de gestion de plate-forme comprenant le développement et la programmation technique de la plate-forme unifiée, et/ou
- une fonction de gestion Web, la fonction de gestion Web comprenant les responsabilités de publication pour toute une unité commerciale, comprenant la création de sites Web, la définition des utilisateurs, l'autorisation des fonctions de gestion de site et des fonctions de publication, l'accès aux sites Web avec des restrictions prédéfinies dans leur zone commerciale, la fourniture d'informations, de données et supports pour publier les activités, et/ou
- une fonction de gestion de site, ladite fonction de gestion de site comprenant l'autorisation d'accès aux fonctions de publication des sites prédéfinis, la définition de la navigation locale, l'identification de la conformité avec ledit ensemble de modèles prédéterminé et/ou ledit ensemble de styles prédéterminé, et/ou
- une fonction de publication, ladite fonction de publication comprend la création et la mise en forme de pages d'un site Web, la création et l'insertion de pointeurs de navigation locale dans les pages d'un site Web, l'insertion de graphiques sur les pages Web, l'ajout de texte sur les pages Web, la réalisation et les changements et les mises à jour, la définition et la vérification des liens vers les pages, la publication et la désactivation de pages ; et/ou
- une fonction de propriétaire de site, ladite fonction de propriétaire de site comprend les responsabilités des contenus du site Web, l'accomplissement des responsabilités administratives comprenant la définition des directives pour fournir une page Web dans certains langages, le format de publication, la période de validité de certaines pages d'un site Web, et/ou
- une fonction d'écriture, ladite fonction d'écriture comprenant la création et/ou la fourniture de textes et de graphiques, et la fourniture de traductions.

7. Station de travail (10) selon l'une quelconque des revendications 1 à 6, comprenant une partie de code de programme effectuant automatiquement une fonction de gestion de langage qui remplace une page Web n'existant pas dans un certain langage demandé par une version de langage disponible de cette page Web conformément à un schéma de priorité prédéfini.

8. Station de travail (10) selon l'une quelconque des revendications 1 à 7, comprenant une partie de code de programme effectuant automatiquement
- une réception d'informations de rétroaction concernant une page Web ou un site Web provenant d'un utilisateur, et
- un routage desdites informations de rétroaction vers une base de données accessible par le responsable d'une telle page Web ou d'un tel site Web, et
- une entrée desdites informations de rétroaction dans ladite base de données.

9. Station de travail (10) selon l'une quelconque des revendications 1 à 8, comprenant une partie de code de programme fournissant l'accès des sites Web à une bibliothèque d'images intégrées, la bibliothèque d'images intégrées comportant une organisation hiérarchique permettant la distinction d'images globalement valides de celles qui doivent être utilisées seulement à l'intérieur d'un site.

10. Station de travail (10) selon l'une quelconque des revendications 1 à 9, comprenant une partie de code de programme effectuant
- des contrôles automatiques des liens en fonction du type de lien, et/ou
- une expiration automatique du contenu des pages Web ou des sites Web, et/ou
- une détection automatique des contenus ou sites brisés, et/ou
- une détection automatique des comptes d'accès Internet des utilisateurs essayant d'accéder aux pages Web ou aux sites Web dont l'autorisation a expiré.

11. Station de travail (10) selon l'une quelconque des revendications 1 à 10, comprenant une partie de code de programme effectuant
- un balayage automatique des dossiers électroniques migrés pour extraire les documents se rapportant aux méta informations
- un attachement automatique dudit document extrait contenant les informations audit document pour la recherche et la récupération par les utilisateurs de ladite base de données unifiée.

12. Produit-programme informatique comprenant des parties de code de programme pour la mise en oeuvre de la fonctionnalité de l'application d'un logiciel client selon l'une quelconque des revendications précédentes lorsque le produit-programme informatique est exécuté sur une station de travail informatique.

13. Produit-programme informatique selon la revendication 12, stocké sur un support d'enregistrement lisible sur ordinateur.
